# EUROPÄISCHE PATENTSCHRIFT

(11) **EP 1 881 656 B1**
(45) Veröffentlichungstag und Bekanntmachung des Hinweises auf die Patenterteilung: **17.08.2011**
(21) Anmeldenummer: 07011453.3
(22) Anmeldetag: 12.06.2007
(51) Int. Cl.: H04L 12/56

(54) **Schaltungsstruktur zur Realisierung eines Knotens in einem Netzwerk zur Übertragung hochbitratiger, IP basierter Zeitmultiplexsignale, insbesondere einem Multi-Gigabit-Ethernet**
Switching structure for implementing a node in a network for transmitting IP-based time multiplex signals with high bit rates, in particular multi-gigabit ethernet
Structure de circuit destinée à la réalisation d'un noeud dans un réseau de transmission de signaux multiplexe temporels haut débit à base IP, en particulier un Ethernet de plusieurs gigabits

(30) Priorität: 14.06.2006 DE 102006027693
(43) Veröffentlichungstag der Anmeldung: 23.01.2008
(73) Patentinhaber: ADVA AG Optical Networking, 98617 Meiningen (DE)
(72) Erfinder: Hinderthür, Henning, Dr., 86923 Finning (DE)
(74) Vertreter: Eder, Thomas

(56) Entgegenhaltungen:
- US-A1- 2002 075 868

## Beschreibung

Die Erfindung betrifft eine Schaltungsstruktur zur Realisierung eines Knotens in einem Netzwerk zur Übertragung hochbitratiger, IP basierter Zeitmultiplexsignate, insbesondere einem Multi-Gigabit-Ethernet, nach Anspruch 1. Des Weiteren betrifft die Erfindung eine Kanalkarte für ein optisches Übertragungssystem sowie eine Struktur eines Netzknotens für ein optisches Wellenlängenmultiplex-Übertragungsnetzwerk, insbesondere ein Multi-Gigabit-Ethernet mit einer solchen Schaltungsstruktur, gemäß den Ansprüchen 10 bzw. 14.

In den letzten Jahren hat sich das Bereitstellen von Breitbandanschlüssen für Kunden von Telekommunikationsunternehmen zu einem Thema von entscheidender Bedeutung entwickelt. Um einen maximalen Nutzen aus ihrer Infrastruktur bereits bestehender IP (Internet Protocol) basierter Kommunikationsnetze zu ziehen, gehen die Service-Provider dazu über, eine Vielzahl unterschiedlicher Dienste, wie übliche Internetzugänge (IP Data), Voice over IP (VoIP), Broadcast TV (IPTV) oder Video-on-Demand (VoD) anzubieten, wodurch sich der Bandbreitebedarf, der an die bestehende Infrastruktur gestellt wird, drastisch erhöht. Dies kann dazu führen, dass die jeweils aktuell zur Verfügung stehende Bandbreite nicht mehr ausreicht und nach einfachen, kostengünstigen Lösungen zur Erhöhung der Bandbreite gesucht werden muss. Dabei scheidet ein Ausbau oder ein Ersetzen der physikalischen Übertragungsstrecken, insbesondere Kabel, Satellitenübertragungsstrecken und Richtfunkstrecken meist aus.

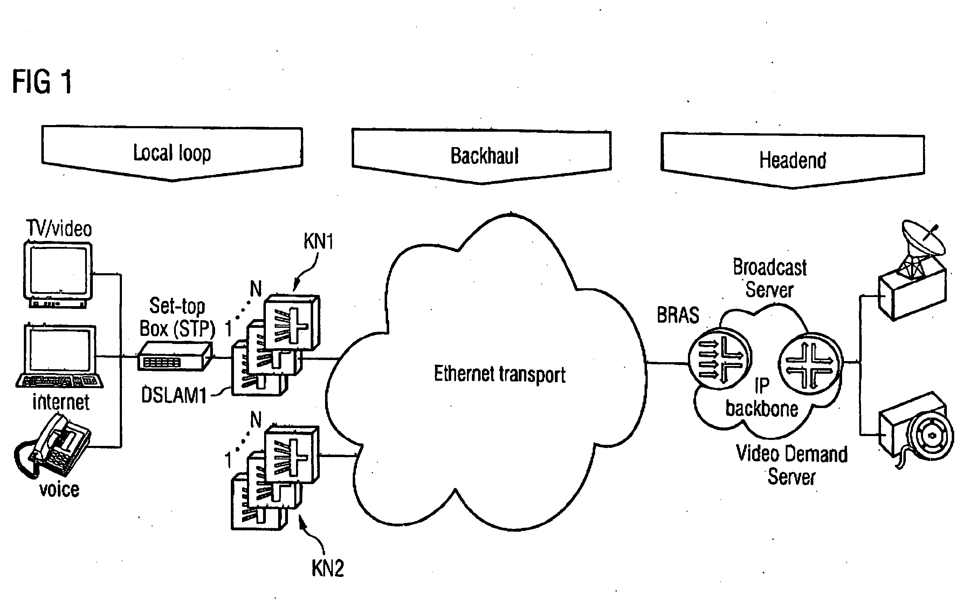

Fig. 1 zeigt schematisch ein Szenario, bei dem ausgehend von einem Headend ein Service-Provider einen Broadeast-Verkehr, der einen oder mehrere Broadcast-Datenströme umfassen kann, und einen Unicast-Verkehr, der einen oder mehrere Unicast-Datenströme umfassen kann, über einen Broadband Routing and Access Server (BRAS) in ein Transportnetz (Backhaul), insbesondere ein Ethernet, einkoppelt. Neben Unicast-Daten, die vom Service-Providcr selbst erzeugt werden, können dem BRAS auch externe Unicast-Datenströme zugeführt werden, z. B. VoIP Datenströme von Teilnehmern aus anderen Netzen oder IP Datenströme von anderen Service-Providem oder Teilnehmern aus anderen Netzen. Bei den vom Service-Provider selbst erzeugten Unicast-Datenströmen kann es sich z. B. um VoD Programme oder dergleichen handeln.

An dieser Stelle sei darauf hingewiesen, dass ein Datenstrom nicht notwendigerweise als separater physikalischer Datenstrom vorliegen muss. Es können mehrere, verschiedene (logische) Datenströme zu einem einzigen physikalischen Datenstrom zusammengefasst sein, beispielsweise durch Paketmultiplex-, Zeitmultiplex- oder Wellenlängenmultiplextechniken, der dann durch ein entsprechendes Signal repräsentiert wird. Ein Datenstrom ist jedoch einem bestimmten Quellport zugeordnet, von dem aus er in das Transportnetz, welches vorzugsweise als Hochgeschwindigkeitsübertragungsnetz ausgebildet ist, eingekoppelt wird. Ein Unicast-Datenstrom ist darüber hinaus auch einem bestimmten Zielport zugeordnet, zu dem er aus dem Transportnetz ausgekoppelt wird. Selbstverständlich kann jeder Datenstrom auch aus mehreren oder einer Vielzahl von Teildatenströmen bestehen, die im Rahmen eines Protokollstacks ebenfalls jeweils einem Zielport und/oder einem Quellport zugeordnet sind.

Fig. 1 zeigt eine Realisierung, bei der ein Service-Provider am Headend einen Broadcast-Datenstrom erzeugt, der beispielsweise mehrere TV Programme beinhaltet (in Fig. 1 durch die Box mit der Satellitenantenne dargestellt), und einen Unicast-Datenstrom zur Bereitstellung eines VoD Service (in Fig. 1 durch die Box mit der Filmrolle dargestellt). Diese Datenströme werden von den genannten Datenquellen einem Broadeast-Server bzw. einem VoD-Server zugeführt und von diesen über den BRAS in das Transportnetz eingekoppelt. Dabei werden die Broadcast- und Unicast-Datenströme üblicherweise zu einem Datenstrom zusammengefasst. Bei diesem Datenstrom kann es sich z. B. um einen Gigabit-Ethemet-Datenstrom handeln, bei dem jeder Rahmen sowohl Broadcast-Daten des Broadcast-Datenstroms als auch Unicast-Datcn des Unicast-Datenstroms enthält.

Der über das Transportnetz übertragene Datenstrom wird an einem Netzknoten KN1, KN2 des Transportnetzes ausgekoppelt, der dem Zielport des Datenstroms entspricht, und in Teildatenströme zerlegt, die ihrerseits den Teilnehmern zugeführt werden. Das Aufsplitten des über das Transpartnetz übertragenen Datenstroms kann z.B. über einen DSLAM (Digital Subscriber Line Access Multiplexer) erfolgen, an dem Local-seitig z. B. 500 Teilnehmer angeschlossen sein können. Das Auswählen der TV Programme und das Aufsplitten des Empfangssignals in die Teilsignale für die unterschiedlichen Endgeräte und das Zusammenführen der Teilsignale kann teilnehmerseitig mittels einer Set-top Box (STP) erfolgen.

Zur Erhöhung der Datenübertragungskapazität bzw. der Bandbreite des Transportnetzes ist es bekannt, am Headend mehrere Datenströme zu erzeugen, die jeweils Broadcast- und Unicast-Daten enthalten und diese durch ein Zeitmultiplexverfahren im Transportnetz zu einem einzigen physikalischen Datenstrom zwischen Headend und Local Loop zusammenzufassen.

Um unter Ausnutzung ein- und desselben Faserpaares eines optischen Transportnetzes mehrere, in der Regel räumlich voneinander getrennte Local Loop Netzknoten an das Headend anzubinden, wird die bekannte Technik des Wellenlängenmultiplexens eingesetzt. Dabei korrespondieren eine oder mehrere dedizierte optische Wellenlängen mit einem bestimmten Local Loop Netzknoten. Die Ein- und Auskopplung der Wellenlängen wird durch so genannte Optical Add-/Drop-Multiplexer (OADM) realisiert. Wird für einen bestimmten Netzknoten eine entsprechend hohe Bandbreite benötigt, so ist es selbstverständlich auch möglich, in diesem Netzknoten zwei optische Kanäle, d.h. zwei Wellenlängen (genauer: Mittenwellenlängen) zu terminieren.

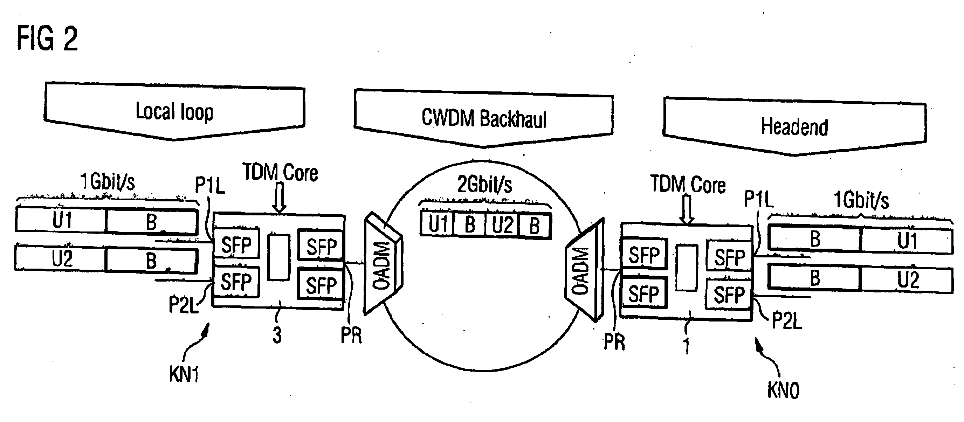

Dieses bekannte Verfahren ist in Fig. 2 dargestellt, wobei der für das Zusammenführen der bei der Ausführungsform in Fig. 2 dargestellten, zwei Headend-scitigen Datenströme eine Zeitmultiplex-/Dcmultiplexeinheit 1 mit zwei Local-seitigen Anschluss -Ports S1L und S2L vorgesehen ist. Diese kann bei der schematischen Darstellung in Fig. 1 in Downstream-Richtung nach dem BRAS angeordnet oder in diesen integriert sein. Der BRAS in Fig. 1 kann dabei so ausgebildet sein, dass er die beiden Datenströme erzeugt, die jeweils den selben Broadcast-Datenstrom B und einen Unicast-Datenstrom U1 bzw. U2 enthalten. Jeder der beiden Datenströme wird einem bestimmten Quellport zugeordnet, der dem Anschluss-Port S1L oder S2L der Zeitmultiplex-/Demultiplexeinheit 1 entspricht. Die Zeitmultiplex-/Demultiplexeinheit 1 fasst die beiden Datenströme an den Anschluss-Ports S1L und S2L zu einem einzigen Datenstrom zusammen, der am Remote-seitigen Anschluss-Port SR über einen Add-/Drop-Multiplexer, der als optischer Add-/Drop-Multiplexer (OADM) ausgebildet ist, in das Transportnetz eingekoppelt wird. Die zu einem physikalischen Datenstrom zusammengefassten Teildatenströme sind jedoch immer noch dem betreffenden Zielport zugeordnet.

Auf diese Weise kann jeder Teildatenstrom an demjenigen Netzknoten ausgekoppelt werden, der den Zielport beinhaltet. Fig. 2 zeigt eine Situation, bei der beide Teildatenströme einem Zielport zugeordnet sind, der dem selben Netzknoten zugeordnet ist. Somit wird das gesamte, beide Teildatenströme enthaltende Zeitmultiplex-Signal am selben Netzknoten ausgekoppelt und mittels einer weiteren Zeitmultiplex-/Demultiplexeinheit 3, die wiederum mit ihrem Remote-seitigen Anschluss-Port PR einem OADM nachgeschaltet ist, in die beiden physikalischen Teildatenströme aufgeteilt. Die Teildatenströme liegen wiederum an den Local-seitigen Anschluss-Ports P1L, P2L der Zeitmultiplex-/Demultiplexeinheit 3 an, welchen auch die Zielports der Teildatenströme zugeordnet sind.

Wie aus Fig. 2 ersichtlich, werden die beiden Teildatenströme zur Übertragung über das Transportnetz in der Weise zu einem einzigen physikalischen Datenstrom zusammengefasst, dass die Datenübertragungsrate im Wesentlichen verdoppelt wird und die Teilsignale unter Aufrechterhaltung ihrer Struktur durch ein Zeitmultiplexverfahren ineinander "verschachtelt" werden, wobei nach wie vor jeder Teildatenstrom jeweils die gesamte Information bestehend aus U1 und B bzw. U2 und B enthält.

Aus Gründen einer einfacheren Darstellung sind die Anschluss-Ports der Zeitmultiplex-/Demultiplexeinheiten 1 und 3 als bidirektionale Ports dargestellt. Es können jedoch selbstverständlich für jeden bidirektionalen Port auch jeweils ein unidirektionaler Receive-Port und ein unidirektionaler Transmit-Port vorgesehen sein.

Durch dieses bekannte Verfahren ergibt sich eine Verdopplung der Übertragungskapazität des Transportnetzes. Es wird jedoch auch die doppelte Bandbreite innerhalb des Transportnetzes benötigt.

Bei der in Fig. 1 dargestellten Ausführungsform handelt es sich bei den Teildatenströmen um Gigabit-Ethernet-Signale, so dass das Transportnetz in der Lage sein muss, ein Zeitmultiplexsignal mit einer Datenrate von 2 Gbit/s zu übertragen.

Selbstverständlich lässt sich dieses bekannte Verfahren auch erweitern, wobei drei und mehr Teildatenströme zu einem, über das Transportnetz zu übertragendes Zeitmultiplex-Signal zusammengefasst werden. Dies führt jedoch zu einem entsprechend vielfachen Bandbreitenbedarf in Bezug auf das Transportnetz.

Als Ausweg bietet es sich an, zusätzlich zur Anwendung des Zeitmultiplexverfahrens ein Wellenlängenmultiplexverfahren einzusetzen, wobei mehrere Zeitmultiplexsignale in der vorstehend erläuterten Art und Weise mit jeweils einer anderen Trägerfrequenz oder Trägerwellenlänge über das Transportnetz übertragen werden könnten. Insbesondere bei einer optischen Übertragung über das Transportnetz kann hierdurch die ohnehin vorhandene, große Bandbreite eines Lichtwellenleiterübertragungsnetzes besser ausgenutzt werden.

Bei optischen Übertragungsnetzwerken für IP basierten Daten-Verkehr wird, wie vorstehend erläutert, üblicherweise das vollständige Zeitmultiplexsignal, das in einem optischen Kanal enthalten ist, in einem Knoten terminiert und mittels einer Zeitmultiplex-/Demultiplexeinheit in die einzelnen Teildatenströme gesplittet bzw. die einzelnen Teildatenströme werden mittels der Zeitmultiplex-/Demultiplexeinheit zu dem vollständigen Zeitmuttiplexsignal zusammengefasst. Damit steht an einem Netzknoten entweder die volle Bandbreite eines vollständigen Zeitmultiplexsignals zur Verfügung, welche mittels des nachgeschalteten DSLAM und einem entsprechenden Protokoll bzw. einem entsprechenden Protokollstack auf die einzelnen Teilnehmer gesplittet wird. Der DSLAM kann dabei, im OSI Schichtenmodell betrachtet, die Funktion eines Schicht 2 und/oder Schicht 3 Switches oder Routers übernehmen, so dass die Entscheidung, welcher Teil des IP Verkehrs im Knoten terminiert und bestimmten Endverbrauchern zugeordnet oder zu einem anderen Knoten durchgeschleift wird, im DSLAM (oder auch geeignetem, dem DSLAM nachgeschalteten Equipment) getroffen wird.

Hierdurch wird die Flexibilität beim Design komplexer Übertragungsnetzwerke beschränkt oder es wird ein relativ aufwändiges Netzwerkequipment (insbesondere komplexe und damit teure DSLAMS, Switches, Router etc.) benötigt.

Aus der US 2002/0075868 A1 ist die Struktur eines Netzwerkknotens bekannt, welcher zur Übertragung von Zeitmultiplexsignalen in einem Netzwerk mit physikalischer Ringstruktur geeignet ist. Diese Struktur umfasst jeweils ein ostseitiges und westseitiges Interface, welches die Signale an das jeweilig genutzte physikalische Übertragungsmedium, beispielsweise einen Lichtwellenleiter oder ein drahtloses Übertragungsmedium anpasst. Intern sind diese Interfaces jeweils mit einer cross-connect-Einheit verbunden, welche auswählbare Teilsignale an ein lokales TDM Benutzerinterface abgibt, bzw. von diesem zugeführt erhält. In diesem Dokument ist auch offenbart, dass die Interfaceeinheiten als Multi-Mediuminterface ausgebildet sein können. Das heißt mittels eines derartigen Netzwerkknotens kann beispielsweise auf der Ostseite des Knotens ein Lichtwellenleiter als Übertragungsmedium und auf der Westseite ein Drahtloses Übertragungsmedium verwendet werden. Die Übertragung der Zeitmultiplexsignale erfolgt jedoch in an sich bekannter Form.

Ausgehend von diesem Stand der Technik liegt der Erfindung die Aufgabe zugrunde, eine Schaltungsstruktur zur Realisierung eines Knotens in einem Netzwerk zur Übertragung hochbitratiger, IP basierter Zeitmultiplexsignale, insbesondere einem optischen Multi-Gigabit-Ethernet, zu schaffen, welche ein flexibles und kostengünstiges Design komplexer, optischer Übertragungsnetzwerke ermöglicht. Des Weiteren liegt der Erfindung die Aufgabe zugrunde, eine Kanalkarte für ein optisches Übertragungssystem mit einer derartigen Struktur und eine Struktur eines Netzknotens für ein optisches Wellenlängenmultiplex-Übertragungsnetzwerk, insbesondere ein optisches Multi-Gigabit-Ethernet zu schaffen.

Die Erfindung löst diese Aufgabe mit den Merkmalen der Patentansprüche 1. bzw. 10 und 14.

Die Erfindung gebt von der Erkenntnis aus, dass in einem optischen Netzwerk für IP-basierte Datenströme eine deutlich höhere Flexibilität beim Design des Netzes bei einer gleichzeitigen Reduzierung der Kosten bei der Realisierung von Netzknoten erreicht wird, wenn im Knoten das auf der Ostseite und der Westseite des Knotens empfangene Receivc-Zeitmultiplexsignal mittels einer Framer-Einheit in die einzelnen gemultiplexten Teilsignale, deren Content in jeweils einem virtuellen Zeitslot des Zeitmultiplexsignals enthalten ist, zerlegt und an 2n internen Ports der Framer-Einheit bereitgestellt werden. Die einzelnen Teilsignale umfassen dabei vorzugsweise jeweils ein Gigabit-Ethernet oder ein Multi-Gigabit-Ethernet-Signal bzw. den betreffenden Content. Die internen Ports der Framer-Einheit sind jeweils als bidirektionale Ports ausgebildet, so dass diesen auch ein entsprechendes Signal zugeführt werden kann, dessen Content von der Framer-Einheit in den zugeordneten virtuellen Zeitslot des ostseitigen oder westscitigen Transmit-Zeitmultiplexsignals integriert wird.

Als virtueller Zeitslot wird dabei im Rahmen der vorliegenden Beschreibung ein Teil einer Rahmenstruktur des hochbitratigen Receive- oder Transmit-Zeitmultiplexsignals mit einem bestimmten Content bezeichnet. Als Content wird der "Dateninhalt" eines virtuellen Zeitslots bezeichnet, unabhängig davon ob Information transportiert wird oder lediglich ein Idle-Signal.

Die erfindungsgemäße Schaltungsstruktur umfasst weiterhin eine Pfadschalter-Einheit, welche einerseits mit den 2n internen Ports der Framer-Einheit und andererseits mit wenigstens einem bidirektionalen Local-Port verbunden ist. Die Pfadschalter-Einheit kann abhängig von einem Ansteuersignal zumindest folgende Schaltfunktionen ausführen:
- Bidirektionales Verbinden eines der 2n internen Ports mit dem wenigstens einen Local-Port (Drop);
- Unidirektionales Verbinden des k-ten internen Ports, welchem der Content des k-ten virtuellen Zeitslots des westseitigen Receive-Signals zugeordnet ist, mit dem (k+n)-ten internen Port derart, dass der Content des k-ten virtuellen Zeitslots des westseitigen Receive-Signals dem k-ten virtuellen Zcitslot des ostseitigen Transmit-Signals zugeführt wird (Pass-through von West nach Ost), und/oder
- Unidirektionales Verbinden des k-ten internen Ports, welchem der Content des k-ten virtuellen Zeitslots des ostseitigen Receive-Signals zugeordnet ist, mit dem (k+n)-ten internen Port derart, so dass der Content des k-ten virtuellen Zeitslots des ostseitigen Receive-Signals dem k-ten virtuellen Zeitslot des westseitigen Transmit-Signals zugeführt wird (Pass-through von Ost nach West);
- Unidirektionales oder bidirektionales Verbinden des k-ten der 2n internen Ports, welchem der Content des k-ten virtuellen Zeitslots des westseitigen Receive-Signals zugeordnet ist, mit dem wenigstens einen Local-Port und gleichzeitiges unidirektionales Verbinden dieses k-ten internen Ports, mit dem (k+n)-ten internen Port derart, so dass der Content des k-ten virtuellen Zeitslots des westseitigen Receive-Signals dem k-ten virtuellen Zeitslot des ostseitigen Transmit-Signals zugeführt wird (Drop eines westseitigen virtuellen Zeitslots & Continue nach Ost);
- Unidirektionales oder bidirektionales Verbinden des k-ten der 2n internen Ports, welchem der Content des k-ten virtuellen Zeitslots des ostseitigen Receive-Signals zugeordnet ist, mit dem wenigstens einen Local-Port und gleichzeitiges unidirektionales Verbinden dieses k-ten internen Ports, mit dem (k+n)-ten internen Port derart, so dass der Content des k-ten virtuellen Zeitslots des ostseitigen Receive-Signals dem k-ten virtuellen Zcitslot des westseitigen Transmit-Signals zugeführt wird (Drop eines ostseitigen virtuellen Zeitslots & Continue nach West).

Auf diese Weise können z. B. ein bestimmter virtueller Zeitslot, der beispielsweise den Content eines Gigabit- oder Multi-Gigabit-Ethernet-Signals umfasst, im Knoten terminiert (gedroppt) oder durchgeschleift (pass-through) oder gleichzeitig "terminiert" und "durchgeschleift" werden (Drop & Continue). Im Fall eines optischen WDM-Netzes kann dies für jede im Knoten terminierte Wellenlänge (d.h. jeden optischen Kanal) erfolgen, wobei für jede terminierte Wellenlänge eine derartige Struktur vorzusehen ist.

Diese Schaltungsstruktur kann vorteilhafterwWeise auf einer Kanalkarte zur Realisierung eines Netzknotens enthalten sein, die nur optische (bidirektionale) Ports aufweist und entsprechende -elektrische Wandlereinheiten aufweist.

Mit dieser Schaltuagsstruktur bzw. einer derartigen Kanalkarte lässt sich ein flexibel konfigurierbarer Netzknoten auf einfache und kostengünstige Weise realisieren.

Ein einem Local-Port der Schaltungsstruktur zugeführtes Transmit-Signals, welches über die Pfadschalter-Einheit einem der internen Ports zugeführt wird, kann eine andere Datenrate und/oder ein anderes Übertragungsprotokoll aufweisen als dies dem zugeordneten virtuellen Zeitslot des zu erzeugenden ost- oder westseitigen Transmit-Signal entspricht und die Framer-Einheit kann so ausgebildet sein, dass sie die Datentrate und/oder das Protokoll des dem Local-Port zugeführten Transmit-Signals in das für das Zuführen des betreffenden Contents in den zugeordneten virtuellen Zeitslot des zu erzeugenden Transmit-Signals erforderliche Datenrate und oder das erforderliche Protokoll umwandelt, Dies ermöglicht die weitere Verwendung von bereits existierenden Netzwerkkomponenten und Netzstrukturen, beispielsweise kann das dem Local-Port zugeführte Transmit-Signal ein SDH- (Synchronous Digital Hierarchy) Signal sein, das eine Übertragungsratc von 155, 622 oder 2488 Mbit/s aufweisen kann. Ist die Datenrate des dem Local-Port zugeführten Signals größer als die dem zugeordneten virtuellen Zeitslot entsprechende Datenrate, so kann die Framer-Einheit den Content des dem Local-Port zugeführten Signals auf mehrere virtuelle Zeitslots aufteilen und insofern die strenge Zuordnung der virtuellen Zeitslots zu einem einzigen Local-Port aufheben. In gleicher Weise kann die Framer-Einheit so ausgebildet sein, dass sie den Content mehrerer virtueller Zeitslots zu einem Signal zusammenfasst und dieses auf einem internen Port ausgibt.

Selbstverständlich kann das Aufteilen des Contents eines höherbitratigen Signals auch vor der Pfadschaltereinheit mittels einer entsprechenden Einheit erfolgen, wobei die betreffenden Teilsignale dann jeweils einem Local-Port zugeführt werden.

Nach einer Ausführungsform der Erfindung sind wenigstens zwei Local-Ports vorgesehen, welche mit der Pfadschalter-Einheit verbunden sind, wobei die Pfadschalter-Einheit so ausgebildet ist, dass die vorgenannten Schaltfunktionen in Bezug auf jeden der wenigstens zwei Local-Ports ausgeführt werden können. Zusätzlich kann folgende Schaltfunktion ausführbar sein:
- Bidirektionales Verbinden des k-ten internen Ports mit einem ersten der wenigstens zwei Local-Ports und gleichzeitiges bidirektionales Verbinden eines zweiten der wenigstens zwei Local-Ports mit dem (k+n)-ten internen Ports, um ein Sharing des k-ten virtuellen Zeitslots durch zwei oder mehrere Knoten zu ermöglichen.

Auf diese Weise ist es möglich, den Content von mehreren Local-Transmit-Signalen, die jeweils einem Local-Port verschiedener Knoten zugeführt werden, in demselben virtuellen Zeitslot zu transportieren, wenn die Local-Transmit-Signale entsprechend geringe Datenraten aufweisen. Damit kann die Übertragungskapazität besser genutzt werden.

Nach einer Ausführungsform der Erfindung kann eine der Anzahl n von virtuellen Zeitslots entsprechende Anzahl von Local-Ports vorgesehen sein, welche mit der Pfadschalter-Einheit verbunden sind, wobei die Pfadschalter-Einheit so ausgebildet ist, dass die Schaltfunktionen gemäß Merkmal (e) des Anspruchs 1 in Bezug auf jeden der n Local-Ports ausgeführt werden können. Dabei kann jedem der n Local-Ports jeweils genau ein virtueller Slot der ostseitigen und der westseitigen Receive- und Transmit-Zeitmultiplexsignale zugeordnet sein.

Auf diese Weise kann sehr einfach ein Netzknoten in einem Netzwerk mit voller Pathprotection bezüglich des gesamten Zeitmultiplexsignals oder mit einer Protection bezüglich des Contents in einem oder mehreren virtuellen Zeitslots realisiert werden.

Die Schaltungsstruktur kann zur Realisierung eines Netzknotcns für ein optisches Netz am ost- und westseitigen Remote-Port jeweils eine opto-elektrische Wandlereinheit umfassen, welche jeweils ein optisches Receive-Zeitmultiptcxsignal in ein elektrisches Receive-Zeitmultiplexsignal umsetzt und ein elektrisches Transmit-Zeitmultiplexsignal in ein optisches Transmit-Zeitmultiplexsignal. Auch kann an jedem Local-Port eine opto-elektrische Wandlereinheit vorgesehen sein, welche jeweils ein optisches Receive-Multiplexsignal in ein elektrisches Reccive-Multiplexsignal umsetzt und ein elektrisches Transmit-Multiplexsignal in ein optisches Transmit-Multiplexsignal.

Schließlich kann die Schaltungsstruktur eine Signal-Regeneratoreinheit aufweisen, welche das Receive-Zeitmultiplexsignal, welches der Framer-Einheit zugeführt wird, oder die Receive-Signale, welche an den internen Ports der Framer-Einheit ausgegeben werden, regeneriert und/oder welche die Transmit-Signale, welche an internen Ports der Framer-Einheit zugeführt werden, oder das Transmit-Zeitmultiplexsignal, welches von der Framer-Einheit ausgegeben wird, regeneriert.

Hierdurch ergibt sich unter anderem der Vorteil, dass bei einem Durchschleifen eines virtuellen Zeitslots (Pass-Through) oder einem Drop & Continue eines virtuellen Zeitslots eine volle Signalregeneration bewirkt wird und somit die Übertragungsstrecke eine geringere Dämpfung bzw. ein besseres Signal-Störvcrhältnis (und, falls relevant, eine geringe Dispersion) aufweist als im Fall eines reinen optischen Knotens in einem WDM-System.

Auf einer besonderen Ausführungsform einer Kanalkarte für ein optisches Übertragungssystem mit einer derartigen Schaltungsstruktur kann wenigstens ein weiteres Paar eines ostseitigen und westseitigen Remote-Ports vorgesehen sein, wobei zwischen jedem ostseitigcn und westseitigen Remote-Port des wenigstens einen weiteren Paares von Remote-Ports eine weitere Signal-Regeneratoreinheit vorgesehen ist, die zur Signalaufbereitung eines dem ostseitigen Remote-Port zugeführten weiteren Receive-Zeitmultiplexsignals dient, welches anschließend dem westseitigen Remote-Port zugeführt wird, und welche zur Signalaufbcreitung eines dem westseitigen Remote-Port zugeführten weiteren Receive-Zeitmultiplexsignals dient, welches anschließend dem ostseitigen Remote-Port zugeführt wird.

Die Signal-Regeneratoreinheit kann in die Framer-Einheit integriert sein. Zusätzlich kann die Signal-Regeneratoreinheit für das wenigstens eine weitere Paar von Remote-Ports mit der Signalregeneratoreinheit für das erste Paar von Remote-Ports integriert sein.

Mit einer derartigen Schaltungsstruktur bzw. Kanalkarte kann in einem Netzknoten eines optischen WDM-Systems zusätzlich zur Verarbeitung des optischen WDM-Signals, welches diesem Knoten zugeordnet ist (d.h. dessen Content über eine reine Regeneration hinaus mittels der Framer-Einheit und der Pfadschalter-Einheit elektrisch verarbeitet wird), ein weiterer WDM-Kanal vollständig (durch elektrische Signalverarbeitung) regeneriert werden.

Weitere Ausführungsformen der Erfindung ergeben sich aus den Unteransprüchen.

Die Erfindung wird nachstehend anhand in der Zeichnung dargestellter Ausführungsbeispiele näher erläutert. In der Zeichnung zeigen:
- Fig. 1: eine schematische Darstellung der wesentlichen Komponenten für eine Übertragung von Broadcast- und Unicast-Datcn von einem Service-Provider über ein Transportnetz zum einzelnen Teilnehmer (Downstream) und von Unicast-Daten vom einzelnen Teilnehmer zum Service-Provider (Upstream);
- Fig. 2: eine schematische Darstellung der Datenübertragung im Zeitmultiplex zwischen einem Service-Provider-seitigen Netzknoten (Headend) und einem teilnehmerseitigen Netzknoten (Local Loop);
- Fig. 3: eine schematische Darstellung der Schaltungsstruktur einer Kanalkarte zur Realisierung eines Netzknotens in den Fig. 1 und 2;
- Fig. 4: eine schematische Darstellung eines optischen Übertragungsnetzwerks mit einer Ringstruktur mit vier Local-Loop-seitigen Netzknoten und einem Headendseitigen Netzknoten, wobei in jedem Local-Loop-seitigen Netzknoten ein virtueller Zeitslot des Zeitmultiplexsignals terminiert ist;
- Fig. 5: eine schematische Darstellung eines optischen WDM-Übertragungsnetzwerks analog Fig. 4, jedoch mit zwei Wellenlängen und acht Local-Loop-seitigen Netzknoten, wobei in jedem Local-Loop-seitigen Netzknoten ein virtueller Zeitslot jeweils eines der beiden Zeitmultiplexsignale terminiert ist;
- Fig. 6: eine schematische Darstellung eines optischen WDM-Übertragungsnetzwerks analog Fig. 5, jedoch mit vier Wellenlängen, wobei in jedem Local-Loop-seitigen Netzknoten zwei virtuelle Zeitslots jeweils eines der beiden Zeitmultiplexsignale terminiert sind;
- Fig. 7: eine schematische Darstellung der Struktur eines Netzknotens mit einer Kanalkarte, die zusätzlich die Zeitmultiplexsignale eines weiteren optischen Kanal regenerieren kann; und
- Fig. 8: eine schematische Darstellung eines optischen Übertragungsnetzwerks analog Fig. 5, jedoch nur mit einer Wellenlänge, wobei jeweils zwei Local-Loop-seitige Netzknoten einen virtuellen Zeitslots sharen.

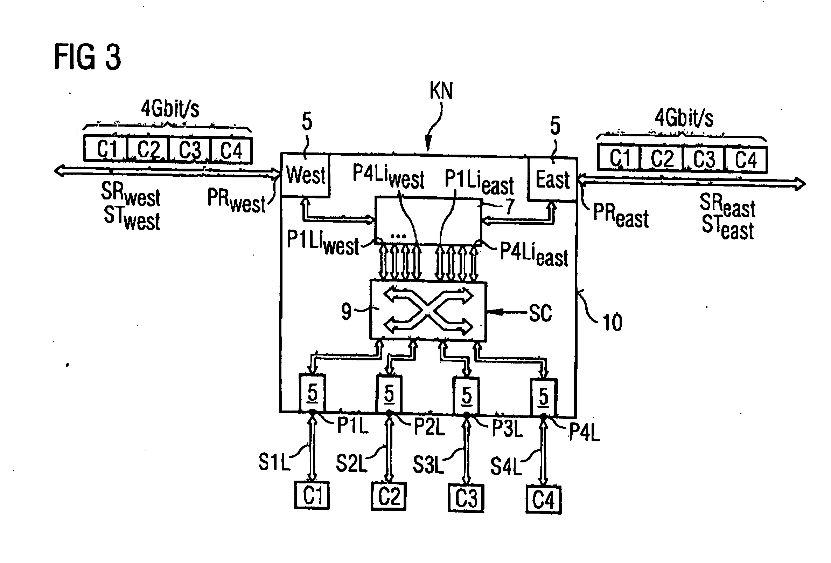

Fig. 3 zeigt in schematischer Darstellung eine Schaltungsstruktur 10 für einen Netzknoten KN für ein vorstehend, in Verbindung mit den Fig. 1 und Fig. 2 beschriebenes Netzwerk. Dem Netzknoten KN ist auf seiner Ostseite und Westseite jeweils ein Receive-Zeitmultiplexsignal SR_{west}, SR_{cast} zugeführt. Da der betreffende westseitige und ostseitige Remote-Port jeweils bidirektional ausgebildet ist, kann die in Fig. 3 dargestellte Schaltungsstruktur 10 für einen Netzknoten KN am westseitigen Remote-Port bzw. am ostseitigen Remote-Port auch ein Transmit-Zeitmultiplexsignal ST_{west} bzw. ST_{cast} abgeben. Bei diesen Zeitmultiplexsignalen, die am westseitigen bzw. ostseitigen Remote-Port der Schaltungsstruktur 10 anliegen, handelt es sich bei den in den Figuren dargestellten Ausführungsformen um optische Zeitmultiplexsignale, die jeweils von einer opto-elektrischen Wandlereinheit 5 in ein entsprechendes elektrisches Zeitmultiplexsignal umgewandelt werden. Aus Gründen der Einfachheit werden die optischen und elektrischen Zeitmultiplexsignale mit identischen Bezugszeichen bezeichnet.

Bei dem Zeitmultiplexsignal handelt es sich um ein Zeitmultiplexsignal mit einer vorgegebenen Rahmenstruktur zum Transport IP-basierter Signale. Das Zeitmultiplexsignal umfasst jeweils, wie in Fig. 3 schematisch dargestellt, mehrere, im dargestellten Ausführungsbeispiel vier, virtuelle Zeitslots, in denen jeweils ein bestimmter Content transportiert wird, der in Fig. 3 mit C1 bis C4 bezeichnet ist.

Die in Fig. 3 dargestellte Schaltungsstruktur 10 umfasst eine Framer-Einheit 7, welcher jeweils das elektrische ostseitige und westseitigc Receive-Zeitmultiplexsignal SR_{west}, SRₑₐₛₜ zugeführt ist. Die Framer-Einheit 7 demultiplext die ihr zugeführten Receive-Zeitmultiplexsignale SR_{west}, SRₑₐₛₜ und stellt den Content C1 bis C4 der einzelnen virtuellen Zeitslots an bidirektionalen internen Local-Ports PILI_{west} bis P4LI_{west} bzw. P1LIₑₐₛₜ bis P4LIₑₐₛₜ bereit. In gleicher Weise können jedem der internen Local-Ports PILI_{west} bis P4LI_{west} bzw. P1LIₑₐₛₜ bis P4LIₑₐₛₜ Signale mit einem Content zugeführt werden, der von der Framer-Einheit 7 in das betreffende ostseitige bzw. westseitige Transmit-ZeitmultiplexsignaI ST_{west} bzw. STₑₐₛₜ integriert wird. Dieses elektrische Transmit-Zeitmultiplexsignal wird dann wiederum jeweils mittels der zugeordneten opto-elektrischen Wandeleinheit 5 in ein entsprechendes optisches Transmit-Zeitmultiplexsignal ST_{west} bzw. STₑₐₛₜ elektrisch optisch gewandelt.

Bei den Zeitmultiplexsignalen handelt es sich vorzugsweise um Multi-Gigabit-Ethernet-Signale, die in jedem virtuellen Zeitslot den Content eines Gigabit-Ethernet-Signals transportierten. Damit stehen an den internen Local-Ports PILI_{west} bis P4LI_{west} bzw. P1LIₑₐₛₜ in diesem Fall Gigabit-Ethernet-Signale an.

Die Framer-Einheit 7 kann dabei zusätzlich zur reinen Multiplexerfunktion die Aufgabe übernehmen, ihr zugeführte Signale, insbesondere Signale, die einem Local-Port P1L bis P4L und damit auch den zugeordneten internen Local-Ports PILI_{west} bis P4LI_{west} bzw.

P1LIₑₐₛₜ zugeführt werden, hinsichtlich der Datenrate und des Protokolls so umzusetzen, dass der betreffende Content in die Rahmenstruktur des jeweiligen westscitigen bzw, ostseitigcn Transmit-Zeitmultiplexsignals integriert werden kann. Auf diese Weise ist es möglich, einem oder mehreren der Local-Ports P1 L bis P4L ein Transmit-Signal ST1L bis ST4L zuzuführen, welches eine niedrigere oder höhere Datenrate aufweist, als dies für die volle Belegung des jeweiligen virtuellen Zeitslots mit Content erforderlich wäre oder auch eine entsprechende Umsetzung bei den an diesen Ports abgegebenen Receive-Signalen SR1L bis SR4L vorzusehen. In der Zeichnung bezeichnen dabei die Bezugszeichen S1L bis S4L jeweils ein Paar von Transmit- und Receivesignalen.

Beispielsweise kann es sich bei einem oder mehreren, einem Local-Port P1L bis P4L zugeführten Transmit-Signal ST1L bis ST4L um SDH-Signale handeln, die eine geringere Bitrate aufweisen, als dies für eine volle Belegung eines virtuellen Zeitslots der Transmit-Zeitmultiplexsignale ST_{west} bzw. STₑₐₛₜ erforderlich wäre. In diesem Fall kann die Framer-Einheit 7 den vollen Content C1 bis C4 der lokalen Transmit-Signale ST1L bis ST4L in den jeweils zugehörigen virtuellen Zeitslot des betreffenden Transmit-Zeitmultiplexsignals ST_{west} bzw. STₑₐₛₜ integrieren. Ist die Datenrate der lokalen Transmit-Signale ST1L, bis ST4L höher als dies für eine volle Belegung eines virtuellen Zeitslots des Transmit-Zcitmultiplexsignals ST_{wet}, STₑₐₛₜ entspräche, so kann die Framer-Einheit 7 den betreffenden Content auf zwei oder mehrere der virtuellen Zeitslots verteilen. Das Erzeugen der lokalen Receive-Signale SRI L bis SR4L kann in umgekehrter Weise erfolgen.

Diese Flexibilität ermöglicht es, mit der Schaltungsstruktur 10 nach Fig. 3 Equipment eines bereits existierenden Netzes, welches mit anderen Übertragungsraten bzw. Protokollen arbeitet, weiter zu verwenden und in das neue bzw. erweiterte Übertragungsnetzwerk zu integrieren.

Wie bereits vorstehend kurz angedeutet, umfasst die in Fig. 3 dargestellte Schaltungsstruktur 10 die vier Local-Ports P1L bis P4L, wobei jedem Port ein lokales Transmit-Signal ST1L bis ST4L mit einem entsprechenden Content zugeführt und ein lokales Receive-Signal SR1L bis SR4L mit einem entsprechenden Content von jedem Port abgeführt werden kann.

Die Schaltungsstruktur 10 kann dabei an jedem der Local-Ports P1L bis P4L eine opto-elektrische Wandlereinheit 5 aufweisen, welche jeweils zur opto-clektrischen bzw. elcktrooptischen Wandlung der lokalen Transmit- bzw. Receive-Signale S1L bis S4L dient. Aus Gründen der Einfachheit sind im Rahmen der vorliegenden Beschreibung die einander entsprechenden optischen bzw. elektrischen Signale mit identischen Bezugszeichen bezeichnet.

Die Schaltungsstruktur 10 weist des Weiteren eine Pfadschalter-Einheit 9 auf, die über die opto-elektrischen Wandlereinheiten 5 mit den Local-Ports P1L bis P4L und den internen Local-Ports P1LI_{west} bis P4LI_{west} und P1LIₑₐₛₜ bis P4LIₑₐₛₜ verbunden ist. Die Pfadschalter-Einheit 9 wird mittels eines Konfigurationssignals SC angesteuert. Die Pfadschalter-Einheit 9 ermöglicht es, abhängig vom Konfigurationssignal SC die folgenden Schaltstellungen einzunehmen, in welchen jeweils zwei oder mehrere der Ports P1L bis P4L, P1LI_{west} bis P4LI_{west} und P1LIₑₐₛₜ bis P4LIₑₐₛₜ miteinander verbunden sind. Die Pfadschalter-Einheit kann somit als Cross-Connect mit ausgewählten Schaltmöglichkeiten aufgefasst werden.

Die Pfadschalter-Einheit 9 ermöglicht dabei abhängig vom Konfigurationssignal SC die folgenden Funktionen der Schaltungsstruktur 10:
- Soll ein virtueller Zeitslot des ostscitigen oder westseitigen Receive-Zeitmultiplexsignals SRₑₐₛₜ, SR_{west} im Knoten KN (vollständig) terminiert werden, so verbindet die Pfadschalter-Einheit 9 den zugehörigen internen Local-Port P1LI_{west} bis P4LI_{west} bzw. P1LIₑₐₛₜ bis P4LIₑₐₛₜ mit dem gewünschten Local-Port P1L bis P4L.
   Bei der in Fig. 3 dargestellten Ausführungsform wird davon ausgegangen, dass es sich um ein Netzwerk mit Protection handelt. Das heißt, ist es aus bestimmten Gründen, beispielsweise infolge einer Unterbrechung des Lichtwellenleiters auf der Ostseite oder Westseite, nicht möglich, von der betreffenden Seite ein Signal zu empfangen bzw. über diese Seite ein Signal zu einem weiteren Knoten zu senden, so wird der Schaltungsstruktur 10 dasselbe Receive-Zeitmultiplexsignal auf der jeweils anderen Seite zugeführt. Es wird also entweder der betreffende westseitige oder der betreffende ostseitige interne Local-Port mit dem gewünschten Local-Port verbunden. In gleicher Weise kann die Schaltungsstruktur 10 mit dem gewünschten Empfänger durch das Senden eines Traiisnüt-Zeitmultiplexsignals auf dieser "Protection"-Seite kommunizieren. Dies ist in Fig. 3 dadurch angedeutet, dass die Zeitmultiplexsignale, die auf der Ostseite bzw. Westseite transportiert werden, mit dem selben Content C1. bis C4 belegt sind. Ist keine Protection erforderlich, so können diese Signale selbstverständlich auch unterschiedlichen Content transportieren. In diesem Fall kann die Schaltungsstruktur auch die doppelte Anzahl von Local-Ports aufweisen, wenn in bestimmten Schaltfunktionen der Pfadschalter-Einheit 9 gewünscht sein sollte, dass alle virtuellen Zeitslots des ostseitigen und des westscitigen Zeitmultiplexsignals im Knoten KN terminiert werden oder dass jedem virtuellen Zeitslot genau ein Local-Port zugeordnet sein soll, wenn dieser im Knoten terminiert wird.
   Es ist zwar grundsätzlich nicht erforderlich, eine feste Zuordnung eines lokalen Ports zu einem oder mehreren virtuellen Zeitslots des ostseitigen und/oder westseitigen Zeitmultiplexsignals vorzunehmen, jedoch kann dies die Handhabung eines Equipments mit einer derartigen Schaltungsstruktur erleichtern. Bei der in Fig. 3 dargestellten Ausführungsform ist daher, unter Berücksichtigung der Protection, nicht nur die Anzahl der Local-Ports P1L bis P4L gleich der Anzahl der virtuellen Zcitslots des ostseitigen bzw. westseitigen Zeitmultiplexsignals gewählt, sondern es ist auch eine feste Zuordnung der Zeitslots zu den betreffenden Local-Ports vorgenommen. Das heißt, falls ein virtueller Zcitslot im Knoten KN terminiert werden soll, schaltet die Pfadschalter-Einheit 9 jeweils den internen Local-Port P1LI_{west} oder P1LIₑₐₛₜ auf den Local-Port P1L durch, den internen Local-Port P2LI_{west} oder den Local-Port P2LIₑₐₛₜ auf den Local-Port P2L und so weiter. Damit wird der Content C1 des ersten virtuellen Zeitslots jeweils am ersten Local-Port P1L, der Content C2 des zweiten virtuellen Zeitslots auf dem zweiten Local-Port P2L ausgegeben und so fort.
   Ist die Schaltungsstruktur 10 beispielsweise auf einer Kanalkarte zur Realisierung eines Knotens in einem optischen WDM-Netzwerk enthalten, so ergibt sich hierdurch eine einfache Handhabung der Kanalkarte bei der Verkabelung der Local-Ports P1L bis P4L.
   Dabei gelten diese Bemerkungen, soweit sinnvoll, auch für die anderen Funktionalitäten
- Neben der vorstehend beschriebenen Drop-Funktion, bei der ein bestimmter virtueller Zeitslot des ostseitigen und/oder westseitigen Zeitmultiplexsignals im Knoten KN (vollständig) terminiert wird, kann die Schaltungsstruktur 10 auch eine Pass-through-Funktion realisieren, bei der ein virtueller Zeitslot eines Receive-Zeitmultiplexsignals SR_{west}, SRₑₐₛₜ dem entsprechenden virtuellen Zeitslot des Transmit-Zeitmultiplexsignals auf der jeweils anderen Seite ST_{east,} ST_{west} zugeordnet wird. Hierzu muss die Pfadschalter-Einheit 9, abhängig von einem entsprechenden Konfigurationssignal SC, jeweils den internen Local-Port P1LI_{west} bis P4LI_{west} mit dem zugehörigen internen Local-Port P1LIₑₐₛₜ bis P4LIₑₐₛₜ verbinden. Da sämtliche Ports vorzugsweise bidirektional ausgebildet sind, wird somit ein vollkommen transparentes Durchschleifen eines virtuellen Zeitslots von Ost nach West bzw. West nach Ost gewährleistet.
   Die Framer-Einheit 7 kann eine Einheit zur Signalregeneration (nicht dargestellt) beinhalten. Hierdurch ergibt sich der Vorteil, dass das elektrische Receive-Zeitmultiplexsignal, welches der Ostseite bzw. der Westseite der Schaltungsstruktur 10 zugeführt wird, wieder aufbereitet wird, insbesondere hinsichtlich des Takts und der Signalform. Beeinträchtigungen des Signals infolge der Dämpfung, der Dispersion oder infolge von Rauscheinflüssen der Übertragungsstrecke können hierdurch ausgeglichen werden. Dies wirkt sich insbesondere vorteilhaft bei der Realisierung der Pass-through-Funktion aus, da durch die Signalregeneration negative Einflüsse der vorhergehenden Übertragungsstrecke ausgeglichen werden können. Wird das Signal über mehrere Knoten KNI bis KNN durchgeschleift, so ergibt sich bei einer Signalregeneration in jedem Knoten keine Verschlechterung des Signalstörabstands, wie dies beispielsweise bei einer rein optischen Verstärkung in den Knoten der Fall wäre.
- Als weitere wichtige Funktionalität eines Knotens KN lässt sich mittels der Schaltstruktur 10 auch die Drop- & Continue-Funktion realisieren, die beispielsweise bei der Übertragung von Broadcast-Signalen, die in einem virtuellen Zeitslot enthalten sind, eingesetzt wird. Bei dieser Funktionalität wird der betreffende virtuelle Zeitslot sowohl im Knoten KN terminiert, als auch gleichzeitig (zumindest der Broadcast-Content) durchgeschleift. Hierzu wird die Pfadschalter-Einheit 9 mittels des Konfigurationssignals SC so angesteuert, dass einerseits der betreffende westseitige oder ostseitige interne Local-Port P1LI_{west} bzw. P1LIₑₐₛₜ mit dem gewünschten Local-Port P1L bis P4L verbunden wird und gleichzeitig der betreffende interne Local-Port P1LI_{west} bis P4LI_{west} bzw. P1LIₑₐₛₜ bis P4LIₑₐₛₜ mit dem jeweils zugeordneten Port der anderen Seite P1LIₑₐₛₜ bis P4LIₑₐₛₜ bzw. P1LI_{west} bis P4LI_{west}. Bei dieser Schaltfunktion kann somit entweder ein Durchschleifen des Signals (Continue-Anteil der Drop- & Continue-Funktion) von Ost nach West oder ein Durchschleifen des Signals von West nach Ost erfolgen. Selbstverständlich können auch beide Funktionalitäten, das heißt Drop & Continue von Ost nach West und Drop & Continue von West nach Ost gleichzeitig geschaltet werden, wenn dies gewünscht sein sollte.
   Handelt es sich nicht um ein Netzwerk mit Protection und transportieren die Zeitmultiplexsignale von Ost nach West und West nach Ost unterschiedliche Contents, so kann die Drop- & Continue-Funktion ebenfalls gleichzeitig in Richtung von Ost nach West und in Richtung von West nach Ost verwendet werden. In diesem Fall muss der virtuelle Zeitslot des ostseitigen Receive-Zeitmultiplexsignals und der entsprechende virtuelle Zeitslot des westseitigen Receive-Zeitmultiplexsignals auf einem jeweils anderen Local-Port terminiert werden.
- Neben diesen Grundfunktionen eines Netzknotens kann die Schaltungsstruktur 10 gemäß Fig. 3 auch zusätzlich ein Sharing eines virtuellen Zeitslots in verschiedenen Knoten ermöglichen, die jeweils unter Verwendung einer Schaltungsstruktur 10 gemäß Fig. 3 realisiert sind. Hierzu wird die Pfadschalter-Einheit 9 so angesteuert, dass jeweils ein interner Port P1LI_{west} bis P4LI_{west} bzw. P1LIₑₐₛₜ bis P4LIₑₐₛₜ mit einem ersten der Local-Ports P1L bis P4L verbunden wird und ein zweiter der Local-Ports P I L bis P4L mit dem entsprechenden internen Local-Port P1LIₑₐₛₜ bis P4LIₑₐₛₜ bzw. P1LI_{west} bis P4LI_{west}, welchem derselbe virtuelle Zeitslot des Zeitmultiplexsignals auf der jeweils anderen Seite zugeordnet ist.
   Auf diese Weise ist es möglich, dass eine weitere lokale Einheit, beispielsweise ein Switch oder ein Endgerät, welches mit dem ersten oder zweiten der Local-Ports verbunden ist, nur einen Teil des Contents des betreffenden virtuellen Zeitslots "terminiert" und den übrigen Teil des Contents durch das (externe) Durchschleifen dieses Signals über den zweiten Port der Schaltungsstruktur 10 zu einem weiteren Netzknoten KN weiterleitet, der dann den übrigen Teil des Contents dieses virtuellen Zeitslots für sich auswertet. Das Management, welcher Content des virtuellen Zcitslots in welchem Knoten "terminiert" wird, können die jeweils weiteren Einheiten bewirken, so dass sich die Schaltungsstruktur 10 in dieser Hinsicht transparent verhält. Selbstverständlich können auch mehr als zwei Knoten nach diesem Prinzip den Content eines virtuellen Zeitslots sharen.

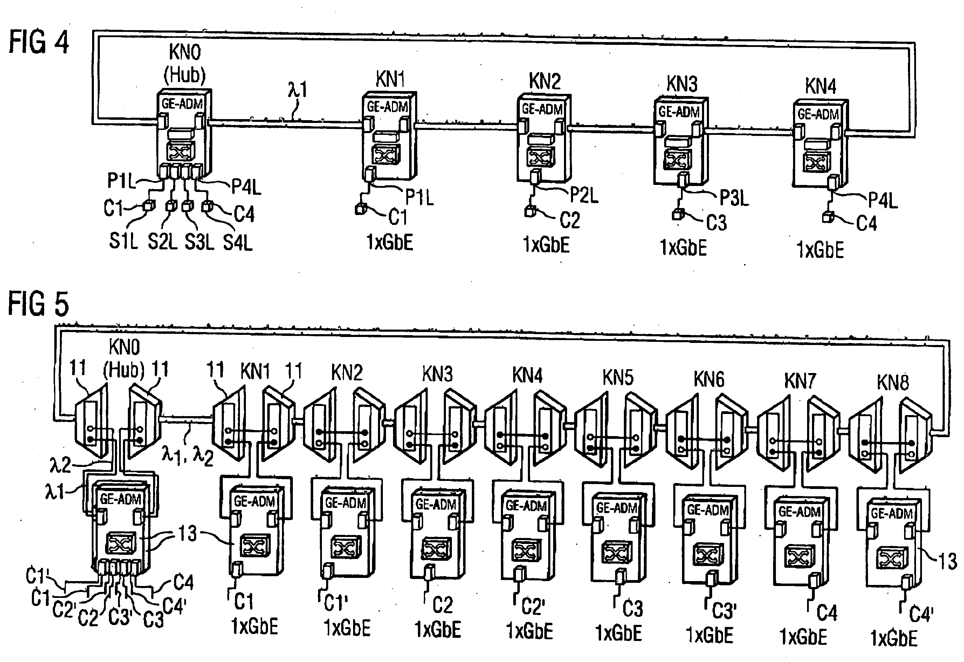

Im Folgenden werden anhand der Figuren 4 bis 8 verschiedene Möglichkeiten zur Realisierung eines Übertragungsnetzwerks bzw. Teil-Übertragungsnetzwerks unter Verwendung der Schaltungsstruktur gemäß Fig. 3 beschrieben.

Fig. 4 zeigt ein ringförmiges Übertragungsnetzwerk mit vier Netzknoten KN1 bis KN4 sowie einem Hub, der auch als KN0 bezeichnet ist, und die Funktionalität eines Headend gemäß Fig. 1 realisiert. Die Signalübertragung erfolgt auf optischem Wege, wobei bei der in Fig. 4 dargestellten Ausführungsform lediglich eine einzige optische Wellenlänge bzw. optische Mittenwellenlänge verwendet wird. Mittels des Knotens KN0 werden in das Netz die Signale S1L bis S4L eingespeist bzw., bei bidirektionalem Datenverkehr, aus dem Netz ausgekoppelt. Die jeweiligen lokalen Reccivc- und Transmit-Signale SR1L bis SR4L bzw. ST1L bis ST4L im Knoten KN0 bzw. deren Content sind jeweils einem virtuellen Zeitslot der im Ring geführten Zeitmultiplexsignale zugeordnet. Selbstverständlich können auch ein oder mehrere der virtuellen Zeitslots nicht benötigt werden, um einen entsprechenden Content zu bzw. von den Local-Ports P1L bis P4L des Knotens KN0 zu transportieren. In diesem Fall können die entsprechenden Local-Ports der SchaItungsstruktur im Knoten KN0 entfallen oder frei bleiben. Die nicht belegten virtuellen Zeitslots können dann zum Transport von Daten zwischen den übrigen Knoten KN1 bis KN4 im Ring verwendet werden.

Bei der in Fig. 4 dargestellten Gesamtstruktur eines ringförmigen Netzes wird jedoch davon ausgegangen, dass sämtliche der verfügbaren, das heißt alle vier virtuellen Zeitslots, jeweils einem der Local-Ports P1L bis P4L des Knotens KN0, das heißt des Hubs, zugeordnet sind. An jedem der weiteren Knoten KN1 bis KN4 wird im dargestellten Ausführungsbeispiel jeweils ein virtueller Zeitslot terminiert. In Anlehnung an die in Fig. 3 dargestellte Schaltungsstruktur, bei der jeweils ein Local-Port P1L bis P4L einem virtuellen Zeitslot zugeordnet ist, wurde in Fig. 4 in jedem der Knoten KN1 bis KN4 jeweils nur der Local-Port P1L bis P4L dargestellt, an welchem das Signal mit dem Contcnt C1 bis C4 des jeweiligen virtuellen Zeitslots anliegt. Dabei wurde bei der Darstellung der Knoten KN1 bis KN4 auf die Darstellung der jeweils weiteren Local-Ports verzichtet.

Wie in Fig. 4 dargestellt, kann im Ring des Netzes das Zeitmultiplexsignal vier virtuelle Zeitslots umfassen, in welchem jeweils der Content eines Gigabit-Ethernet-Signals (GbE) transportiert wird. Im Ring wird somit ein vier Gigabit-Ethernet-Signal übertragen.

Selbstverständlich lässt sich diese Struktur jedoch auch auf den Transport eines n-Gigabit-Ethernet-Signals mit einer Anzahl von n-Knoten (zusätzlich zum Hub) erweitern.

Bei der Ausführungsform gemäß Fig. 4 muss jede Kanalkarte 13 somit in Bezug auf den jeweils zu terminierenden virtuellen Zeitslot auf die Funktion "Drop" ausüben und in Bezug auf die jeweils übrigen virtuellen Zeitslots die Funktion "Pass-Through", d.h. die betreffenden internen Local-Ports P1LI_{west} bis P4LI_{west} bzw. P1LIₑₐₛₜ bis P4LIₑₐₛₜ und die Local-Ports P1L bis P4L müssen durch eine geeignete Ansteuerung der Pfadschalter-Einheit entsprechend verbunden werden.

Die in Fig. 5 dargestellte Struktur eines Übertragungsnetzwerks bezieht sich auf ein ringförmiges WDM-Übertragungsnetzwerk mit zwei Kanälen, das heißt mit zwei optischen Mittelwellenlängen λ₁, λ₂. Jeder dieser optischen Kanäle transportiert ein Zeitmultiplexsignal mit, im dargestellten Ausführungsbeispiel, vier virtuellen Zeitslots. Die optischen Zeitmultiplexsignale können in beiden Übertragungsrichtungen des Rings identisch sein, so dass auf diese Weise eine Protection realisiert wird. Die optischen Zeitmultiplexsignale werden dem Ring über den Hub bzw. den Knoten KN0 über jeweils eine optische Multiplexcr-/Demultiplexereinheit 11 zugeführt bzw. von diesem abgeführt. Die Signale werden jeweils von einer Kanalkarte 13 erzeugt, welche eine Struktur gemäß Fig. 3 umfasst. Jede Kanalkarte fasst die Signale auf vier Local-Ports zu einem Zeitmultiplexsignal zusammen bzw. demultiplext ein Receive-Zeitznultiplexsignal auf die betreffenden Local-Ports. Da es sich ebenfalls um ein optisches Übertragungssystem handelt, umfasst jede Kanalkarte, wie in Fig. 3 dargestellt, opto-elektrische Wandler 5 zur elektrisch-optischen bzw. optisch-elektrischen Wandlung der elektrischen bzw. optischen Zeitmultiplexsignale.

Wie in Fig. 5 dargestellt, wird in den in Übertragungsrichtung aufeinander folgenden Netzknoten KN1 bis KN8 jeweils abwechselnd ein virtueller Zeitslot des ersten optischen Kanals bzw. zweiten optischen Kanals terminiert. Jedes Zeitmultiplexsignal umfasst wiederum vier virtuelle Zeitslots, in dem der Content von jeweils einem Gigabit-Ethernet-Signal transportiert werden kann, das heißt, jedes Zeitmultiplexsignal stellt ein vier Gigabit-Ethernet-Signal dar.

Das abwechselnde Terminieren jeweils eines Zeitslots aus dem ersten bzw. zweiten optischen Kanal stellt sicher, dass wegen des Vorhandenseins einer Regeneratoreinheit auf jeder Kanalkarte der Knoten KN 1 bis KN8, die wiederum eine Struktur gemäß Fig. 3 umfassen, in jedem zweiten Knoten eine Signalregeneration erfolgt. Das Signal des jeweils anderen optischen Kanals, von dem im betreffenden Knoten kein virtueller Zeitslot terminiert wird, wird in dem betreffenden Netzknoten auf optischem Wege durchgeschleift. Es kann hier allenfalls noch eine optische Verstärkung vorgenommen werden, wodurch sich jedoch nicht der ursprüngliche Signalstörabstand des im Knoten KN0 eingekoppelten optischen Signals wiederherstellen lässt.

Wie in Fig. 4 ist auch bei dem in Fig. 5 dargestellten Übertragungsnetz in jedem Knoten nur derjenige Local-Port dargestellt, der dem jeweils terminierten virtuellen Zeitslot des betreffenden optischen Signals zugeordnet ist.

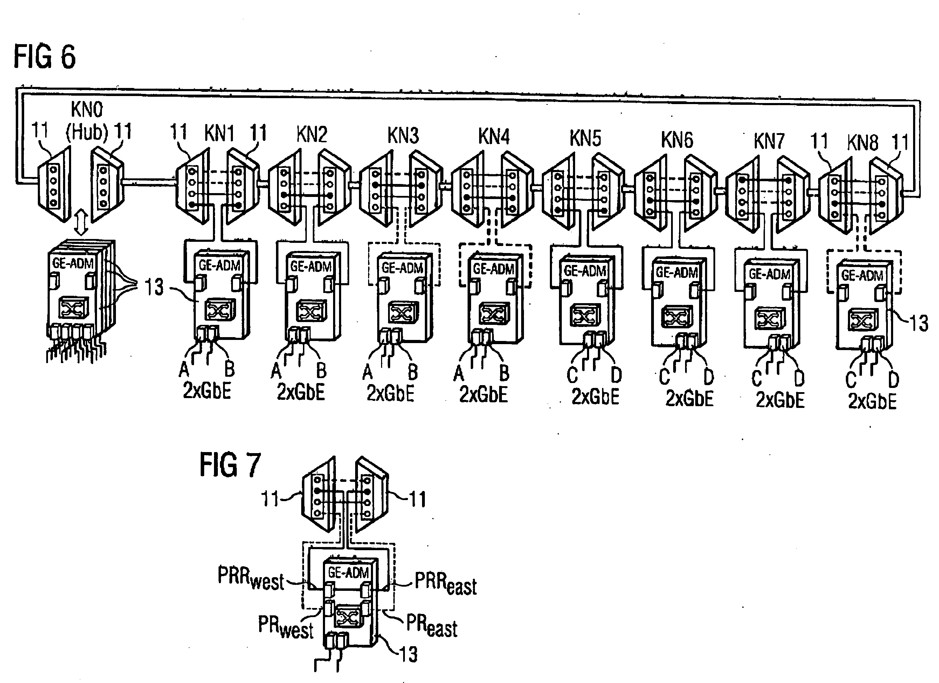

Fig. 6 zeigt eine Ausführungsform eines ringförmigen, optischen Übertragungsnetzes, das im Wesentlichen der Ausführungsform gemäß Fig. 5 entspricht. Allerdings werden bei dieser Ausführungsform mittels vier Kanalkarten 13, die jeweils eine Struktur gemäß Fig. 3 aufweisen, vier optische Kanäle mit jeweils vier virtuellen Zeitslots in den Übertragungsring eingekoppelt. Hierzu dient wiederum eine optische Multiplexer-/Demultiplexereinheit 11, jeweils für eine Übertragungsrichtung. An jedem der Netzknoten KN 1 bis KN8 wird jeweils ein optischer Kanal, ebenfalls mittels jeweils einer optischen Multiplexer-/Demultiplexereinheit 11, ausgekoppelt. Im dargestellten Ausführungsbeispiel werden dabei in jedem der Knoten zwei virtuelle Zeitslots terminiert, so dass jeweils zwei Local-Ports belegt sind, welche die entsprechenden lokalen Receive- und Transmit-Signale führen. Da im Knoten KN0 jeweils vier Zeitmultiplexsignale angekoppelt bzw. ausgekoppelt werden, die jeweils vier virtuelle Zeitslots zum Transport von jeweils dem Content eines Gigabit-Ethernet-Signals umfassen, werden in jedem Knoten zwei Gigabit-Ethernet-Signale bereitgestellt. Um einen optimalen Signalstörabstand im Ring zu erreichen, werden in den ersten vier Knoten jeweils einer der optischen Kanäle ausgekoppelt und in jedem Knoten zwei virtuelle Zeitslots des betreffenden optischen Kanals terminiert. In den zweiten vier Knoten werden in der selben Reihenfolge wie bei den ersten vier Knoten ebenfalls wiederum ein optischer Kanal ausgekoppelt und jeweils die beiden weiteren virtuellen Zeitslots terminiert.

Fig. 7 zeigt eine weitere Ausführungsform einer Kanalkarte 13, mit der in Verbindung mit jeweils einer optischen Multiplexer-/Demultiplexereinheit 11 für jede Übertragungsrichtung eines optischen Netzes ein Netzknoten realisiert werden kann. Diese Kanalkarte 13 umfasst ein zusätzliches Paar von optischen Regenerations-Remote-Ports PRR_{west} bzw. PRRₑₐₛₜ, welche jeweils mit einem weiteren Ausgang der optischen Multiplexer-/Demultiplexereinheit verbunden sind. Auf diese Weise kann ein zweiter optischer Kanal in dem betreffenden Knoten ausgekoppelt und der Kanalkarte 13 zugeführt werden. Die Kanalkarte 13 führt jedoch in Bezug auf die Ports PRR_{west} bzw. PRRₑₐₛₜ lediglich eine optischelektrische Wandlung bzw. elektrisch-optische Wandlung aus mit einer dazwischen geschalteten Signalregeneration. Hierfür kann eine zusätzliche Signal-Regenemtoreinheit vorgesehen sein oder die Regenerationsfunktion in Bezug auf diese zusätzlichen Zeitmultiplexsignale wird von der bereits vorhandenen Signal-Regeneratoreinheit, die beispielsweise in der Framer-Einheit integriert sein kann, übernommen.

Wird die in Fig. 6 dargestellte Struktur mit einer derartigen Kanalkarte 13 realisiert, so werden in jedem Knoten mittels der betreffenden Kanalkarte 13 jeweils sowohl das Zeitmultiplexsignal des vollständig durchgeschleiften Kanals regeneriert als auch das dem optischen Kanal entsprechende Zeitmultiplexsignal, von dem jeweils zwei virtuelle Zeitslots im betreffenden Knoten terminiert werden.

Selbstverständlich kann eine derartige Kanalkarte auch um mehrere Paare von weiteren Remote-Ports erweitert werden, mit denen jeweils die volle Regeneration eines optischen Kanals (in beiden Übertragungsrichtungen) möglich ist.

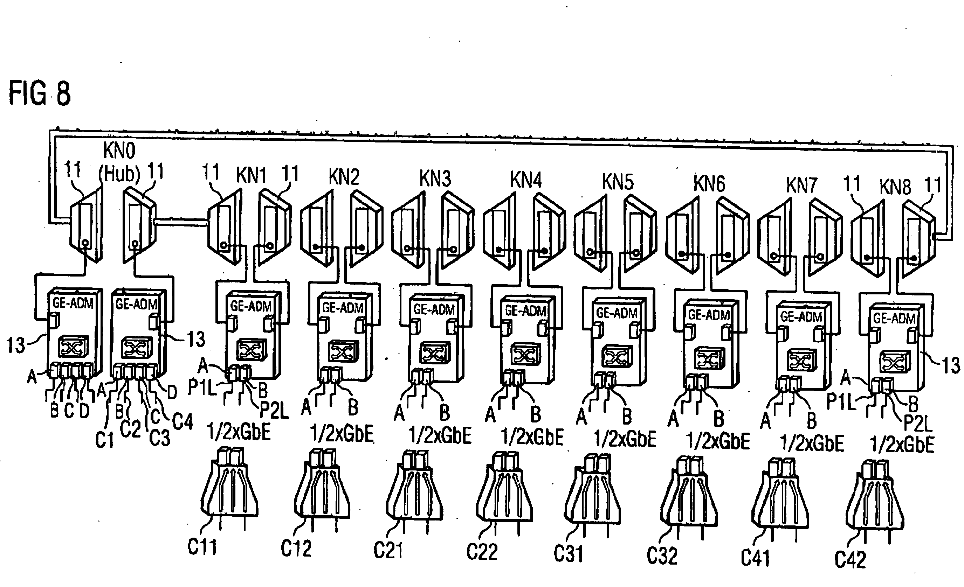

Fig. 8 zeigt wiederum ein ringförmiges, optisches Übertragungsnetzwerk mit einem Hub bzw. Knoten KN0 und acht weiteren Knoten KN1 bis KN8. Im Hub werden mittels zweier Kanalkarten 13 jeweils für die normale Übertragungsrichtung und die Protection-Übertragungsrichtung über jeweils eine optische Multiplexer-/Demultiplexereinheit 11 ein optisches Transmit-Zeitmultiplexsignal mit einer bestimmten Mittenwellenlänge in den Übertragungsring eingekoppelt bzw. ein Receive-Zeitmultiplexsignal aus dem Ring ausgekoppelt. Dabei kann die Funktion dieser beiden Kanalkarten 13 selbstverständlich, wie dies bei der Struktur in Fig. 3 auch geschehen ist, auf einer Kanalkarte vereint sein.

Die weiteren Knoten KN1 bis KN8 sind im dargestellten Ausführungsbeispiel wieder mit jeweils einer Kanalkarte 13 und einem Paar von optischen Multiplexer-/Demultiplexereinheiten 11 realisiert. Da im vorliegenden Ausführungsbeispiel jedoch in der dargestellten Ausbaustufe lediglich ein optischer Kanal verwendet wird, könnte auch auf die optischen Multiplexer-/Demultiplexereinheiten 11 verzichtet werden und das optische Signal jeweils direkt mit den Remote-Ports der Kanalkarten verbunden werden.

In jedem der Knoten KN1 bis KN8 wird jeweils nur ein tcilweiser Content C1 bis C4 eines virtuellen optischen Zeitslots terminiert. Hierzu wird, wie vorstehend beschrieben, die betreffende Kanalkarte in Bezug auf jeweils die Local-Ports P1L, P2L in den "sharing"-Modus geschaltet. Dabei wird das am ersten Local-Port P1 L zur Verfügung gestellte Local-Signal mit dem Content C1 bis C4 jeweils über eine mit dem Port P1L und P2L verbundene nachgeschaltete Einheit, beispielsweise über einen DSLAM, auf den zweiten Local-Port P2L durchgeschleift bzw*.* umgekehrt. Die weitere Einheit verwendet dabei von dem ihr zugeführten Content C1 des dem ersten virtuellen Zeitslot entsprechenden Local-Signals nur einen ihm zugewiesenen Anteil. Der weitere Anteil wird durch das weitere "Durchschleifen" des Signals über die externe weitere Einheit in einem anderen Netzknoten ausgewertet. Dies kann beispielsweise der in Übertragungsrichtung unmittelbar nächste Netzknoten sein, wie dies in Fig. 8 schematisch dargestellt ist. Der erste Teil des Contents C1 ist dabei mit C1₁ und der zweite Teil des Contents mit C1₂ bezeichnet. Auf diese Weise kann in jedem der Knoten KN1 bis KN8 jeweils nur die Übertragungskapazität von einem halben Gigabit-Ethernet-Signal bereitgestellt werden. Selbstverständlich kann das Aufteilen des Contents jedoch auch unsymmetrisch erfolgen. In gleicher Weise kann ein Sharing des virtuellen Zeitslots nicht nur von zwei, sondern auch von mehreren Knoten durchgeführt werden.

Durch das Prinzip des Sharings von virtuellen Zeitslots wird somit eine wesentlich größere Flexibilität beim Entwurf und bei der Realisierung eines optischen Übertragungsnetzwerks erreicht.

Die Ansteuerung der Pfadschalter-Einheit 7 bei den Ausführungsformen gemäß den Fig. 5, 6 und 8 erfolgt jeweils analog zu den vorstehenden Erläuterungen in Verbindung mit Fig. 4.

Es sei darauf hingewiesen, dass selbstverständlich die vorbeschriebenen Funktionen "Drop", "Pass-through", "Drop & Continue" und "Timeslot-Sharing" in einem Netzwerk in beliebiger Weise kombiniert werden können, abhängig von den gewünschten Funktionalitäten.

## Patentansprüche

1. Schaltungsstruktur zur Realisierung eines Knotens in einem Netzwerk zur Übertragung hochbitratiger, IP basierter Zeitmultiplexsignale, insbesondere einem optischen Multi-Gigabit-Ethernet,
a) mit einem bidirektionalen westseitigen (PR_{west}) und einem bidirektionalen ostseitigen (PRₑₐₛₜ) Remote-Port, wobei am westseitigen Remote-Port (PR_{west}) ein westseitiges Receive-Zeitmultiplexsignal (SR_{west}) empfangen und ein westseitiges Transmit-Zeitmultiplexsignal (STweₛₜ) gesendet und am ostseitigen Remote-Port (PRₑₐₛₜ) ein ostseitiges Receive-Zeitmultiplexsignal (SRₑₐₛₜ) empfangen und ein ostseitiges Transmit-Zeitmultiplexsignal (STₑₐₛₜ) gesendet wird,
b) wobei jedes Zeitmultiplexsignal (SR_{West}, ST_{west}, SRₑₐₛₜ, STₑₐₛₜ) eine Rahmenstruktur mit einer Anzahl von n virtuellen Zeitslots aufweist, in welchen jeweils ein bestimmter Content (C1 - C4) transportiert wird,
**dadurch gekennzeichnet,**
c) **dass** die Schaltungsstruktur (10) eine Framer-Einheit (7) aufweist, welcher das westseitige (SR_{west}) und das ostseitige (SRₑₐₛₜ) Receive-Zeitmultiplexsignal zugeführt ist und welche eine Anzahl von 2n bidirektionaler interner Ports (P1Li_{west}-P4Li_{west}; P1Liₑₐₛₜ-P4Liₑₐₛₜ) aufweist, an welchen die Framer-Einheit (7) jeweils ein Receive-Signal ausgibt, welches jeweils den Content eines zugeordneten virtuellen Zeitslots des westseitigen (SR_{west}) und des ostseitigen (SRₑₐₛₜ) Receive-Zeitmultiplexsignals umfasst, und an welchen der Framer-Einheit (7) jeweils ein Transmit-Signal zuführbar ist, dessen Content die Framer-Einheit (7) bei der Erzeugung des betreffenden westseitigen (ST_{west}) oder ostseitigen (STₑₐₛₜ) Transmit-Zeitmultiplexsignals dem jeweils zugeordneten virtuellen Zeitslot zuführt, und
d) **dass** die Schaltungsstruktur (10) eine Pfadschalter-Einheit (9) aufweist, welche einerseits mit den 2n internen Local-Ports (P1LI_{west}-P4LI_{west}; P1LIₑₐₛₜ-P4LIₑₐₛₜ) der Framer-Einheit (7) und andererseits mit wenigstens einem bidirektionalen Local-Port (P1L bis P4L) verbunden ist,
e) wobei die Pfadschalter-Einheit (9) abhängig von einem Ansteuersignal zumindest folgende Schaltfunktionen ausführen kann:
i) Bidirektionales Verbinden eines der 2n internen Local-Ports (P1LI_{west}-P4LI_{west}; P1LIₑₐₛₜ-P4LIₑₐₛₜ) mit dem wenigstens einen Local-Port (P1L bis P4L) ;
ii) Unidirektionales Verbinden des k-ten internen Local-Ports (P1LI_{west}-P4LI_{west}), welchem der Content des k-ten virtuellen Zeitslots des westseitigen Receive-Zeitmultiplexsignals (SR_{west}) zugeordnet ist, mit dem (k+n)-ten internen Local-Port (P1LIₑₐₛₜ-P4LIₑₐₛₜ) derart, dass der Content des k-ten virtuellen Zeitslots des westseitigen Receive-Zeitmultiplexsignals (SR_{west}) dem k-ten virtuellen Zeitslot des ostseitigen Transmit-Zeitmultiplexsignals (STₑₐₛₜ) zugeführt wird , und/oder
iii) Unidirektionales Verbinden des k-ten internen Local-Ports (P1LIₑₐₛₜ-P4LIₑₐₛₜ), welchem der Content des k-ten virtuellen Zeitslots des ostseitigen Receive-Zeitmultiplexsignals (SRₑₐₛₜ) zugeordnet ist, mit dem (k+n)-ten internen Local-Port (P1LI_{west}-P4LI_{west}) derart, dass der Content des k-ten virtuellen Zeitslots des ostseitigen Receive-Zeitmultiplexsignals (SRₑₐₛₜ) dem k-ten virtuellen Zeitslot des westseitigen Transmit-Zeitmultiplexsignals (ST_{west}) zugeführt wird;
iv) Unidirektionales oder bidirektionales Verbinden des k-ten der 2n internen Local-Ports (P1LI_{west}-P4LI_{west}), welchem der Content des k-ten virtuellen Zeitslots des westseitigen Receive-Zeitmultiplexsignals (SR_{west}) zugeordnet ist, mit dem wenigstens einen Local-Port (P1L bis P4L) und gleichzeitiges unidirektionales Verbinden dieses k-ten internen Local-Ports, mit dem (k+n)-ten internen Local-Port derart, dass der Content des k-ten virtuellen Zeitslots des westseitigen Receive-Zeitmultiplexsignals (SR_{west}) dem k-ten virtuellen Zeitslot des ostseitigen Transmit-Zeitmultiplexsignals (STₑₐₛₜ) zugeführt wird;
v) Unidirektionales oder bidirektionales Verbinden des k-ten der 2n internen Local-Ports (P1LIₑₐₛₜ-P4LIₑₐₛₜ), welchem der Content des k-ten virtuellen Zeitslots des ostseitigen Receive-Zeitmultiplexsignals (SRₑₐₛₜ) zugeordnet ist, mit dem wenigstens einen Local-Port (P1L bis P4L) und gleichzeitiges unidirektionales Verbinden dieses k-ten internen Local-Ports (P1LIₑₐₛₜ-P4LIₑₐₛₜ) mit dem (k+n)-ten internen Local-Port (P1LI_{west}-P4LI_{west}) derart, dass der Content des k-ten virtuellen Zeitslots des ostseitigen Receive-Zeitmultiplexsignals (SRₑₐₛₜ) dem k-ten virtuellen Zeitslot des westseitigen Transmit-Zeitmultiplexsignals (ST_{west}) zugeführt wird.

2. Schaltungsstruktur nach Anspruch 1, **dadurch gekennzeichnet, dass** in jedem der n virtuellen Zeitslots der Content eines Gigabit-Ethernet-Signals oder eines Multi-Gigabit-Ethernet-Signals transportiert wird.

3. Schaltungsstruktur nach Anspruch 1 oder 2, **dadurch gekennzeichnet, dass** ein dem wenigstens einen Local-Port (P1L bis P4L) zugeführtes Transmit-Signal, welches über die Pfadschalter-Einheit (9) einem der internen Local-Ports (P1LI_{west}-P4LI_{west}; P1LIₑₐₛₜ-P4LIₑₐₛₜ) zugeführt wird, eine andere Datenrate und/oder ein anderes Übertragungsprotokoll aufweist als dies dem zugeordneten virtuellen Zeitslot des zu erzeugenden ost- oder westseitigen Transmit-Zeitmulitplesxignals entspricht und dass die Framer-Einheit (7) so ausgebildet ist, dass sie die Datentrate und/oder das Protokoll des dem Local-Port (P1L bis P4L) zugeführten Transmit-Signals in das für das Zuführen des betreffenden Contents in den zugeordneten virtuellen Zeitslot des zu erzeugenden Transmit-Zeitmultiplexsignals erforderliche Datenrate und oder das erforderliche Protokoll umwandelt.

4. Schaltungsstruktur nach einem der vorhergehenden Ansprüche, **dadurch gekennzeichnet, dass** wenigstens zwei Local-Ports (P1 L bis P4L) vorgesehen sind, welche mit der Pfadschalter-Einheit (9) verbunden sind, und dass die Pfadschalter-Einheit (9) so ausgebildet ist, dass die Schaltfunktionen gemäß Merkmal e) des Anspruchs 1 in Bezug auf jeden der wenigstens zwei Local-Ports (P1 L bis P4L) ausgeführt werden können.

5. Schaltungsstruktur nach Anspruch 4, **dadurch gekennzeichnet, dass** die Pfadschalter-Einheit (9) so ausgebildet ist, dass sie zusätzlich folgende Schaltfunktion ausführen kann:
a) Bidirektionales Verbinden des k-ten internen Local-Ports (P1LI_{west}-P4LI_{west}; P1 LIₑₐₛₜ-P4L1ₑₐₛₜ) mit einem ersten der wenigstens zwei Local-Ports (P1L bis P4L) und gleichzeitiges bidirektionales Verbinden eines zweiten der wenigstens zwei Local-Ports (P1L bis P4L) mit dem (k+n)-ten internen Local-Port (P1LI_{west}-P4LI_{west}; P1LIₑₐₛₜ-P4LIₑₐₛₜ), um ein Sharing des k-ten virtuellen Zeitslots durch zwei oder mehrere Knoten (KN1-KN8) zu ermöglichen.

6. Schaltungsstruktur nach einem der vorhergehenden Ansprüche, **dadurch gekennzeichnet, dass** eine der Anzahl n von virtuellen Zeitslots entsprechende Anzahl von Local-Ports (P1L bis P4L) vorgesehen ist, welche mit der Pfadschalter-Einheit (9) verbunden sind, und dass die Pfadschalter-Einheit (9) so ausgebildet ist, dass die Schaltfunktionen gemäß Merkmal e) des Anspruchs 1 in Bezug auf jeden der n Local-Ports (P1L bis P4L) ausgeführt werden können.

7. Schaltungsstruktur nach Anspruch 6, **dadurch gekennzeichnet, dass** jedem der n Local-Ports (P1L bis P4L) jeweils genau ein virtueller Slot der ostseitigen und der westseitigen Receive- und Transmit-Zeitmultiplexsignale (SRₑₐₛₜ, SR_{west}; STₑₐₛₜ, ST_{west}) zugeordnet ist.

8. Schaltungsstruktur nach einem der vorhergehenden Ansprüche, **dadurch gekennzeichnet, dass** am ost- und westseitigen Remote-Port jeweils eine opto-elektrische Wandlereinheit vorgesehen ist, welche jeweils ein optisches Receive-Zeitmultiplexsignal in ein elektrisches Receive-Zeitmultiplexsignal umsetzt und ein elektrisches Transmit-Zeitmultiplexsignal in ein optisches Transmit-Zeitmultiplexsignal.

9. Schaltungsstruktur nach einem der vorhergehenden Ansprüche, **dadurch gekennzeichnet, dass** an jedem Local-Port (P1L bis P4L) eine opto-elektrische Wandlereinheit (5) vorgesehen ist, welche jeweils ein optisches Receive-Multiplexsignal in ein elektrisches Receive-Multiplexsignal umsetzt und ein elektrisches Transmit-Multiplexsignal in ein optisches Transmit-Multiplexsignal.

10. Schaltungsstruktur nach einem der vorhergehenden Ansprüche, **dadurch gekennzeichnet, dass** eine Signal-Regeneratoreinheit vorgesehen ist, welche das Receive-Zeitmultiplexsignal (SRₑₐₛₜ. SR_{west}), welches der Framer-Einheit (7) zugeführt wird, oder die Receive-Signale, welche an den internen Local-Ports (P1LI_{west}-P4LI_{west}; P1LIₑₐₛₜ-P4LIₑₐₛₜ) der Framer-Einheit (7) ausgegeben werden, regeneriert und/oder welche die Transmit-Signale, welche an internen Local-Ports (P1LI_{west}-P4LI_{west}; P1LIₑₐₛₜ-P4LIₑₐₛₜ) der Framer-Einheit (7) zugeführt werden, oder das Transmit-Zeitmultiplexsignal (STₑₐₛₜ, ST_{west}), welches von der Framer-Einheit (7) ausgegeben wird, regeneriert.

11. Kanalkarte für ein optisches Übertragungssystem mit einer Schaltungsstruktur (10) nach einem der vorhergehenden Ansprüche, wobei alle erforderlichen Komponenten auf der Kanalkarte vorgesehen sind.

12. Kanalkarte nach Anspruch 11, **dadurch gekennzeichnet, dass** wenigstens ein weiteres Paar eines ostseitigen und westseitigen Remote-Ports vorgesehen ist und dass zwischen jedem ostseitigen und westseitigen Remote-Port des wenigstens einen weiteren Paares von Remote-Ports eine weitere Signal-Regeneratoreinheit vorgesehen ist, die zur Signalaufbereitung eines dem ostseitigen Remote-Port zugeführten weiteren Receive-Zeitmultiplexsignals dient, welches anschließend dem westseitigen Remote-Port zugeführt wird, und welche zur Signalaufbereitung eines dem westseitigen Remote-Port zugeführten weiteren Receive-Zeitmultiplexsignals dient, welches anschließend dem ostseitigen Remote-Port zugeführt wird.

13. Kanalkarte nach Anspruch 12, **dadurch gekennzeichnet, dass** an jedem ostseitigen und westseitigen Remote-Port des wenigstens einen weiteren Paares eines ostseitigen und westseitigen Remote-Ports eine opto-elektrische Wandlereinheit zur optisch-elektrischen Wandlung des betreffenden optischen Receive-Zeitmultiplexsignals und zur elektrisch-optischen Wandlung des betreffenden elektrischen Transmit-Zeitmultiplexsignals vorgesehen ist.

14. Kanalkarte nach Anspruch 12 oder 13, **dadurch gekennzeichnet, dass** die weitere Signal-Regeneratoreinheit für das wenigstens eine weitere Paar eines ostseitigen und westseitigen Remote-Ports mit der vorhandenen Signal-Regeneratoreinheit zu einer einzigen Signal-Regeneratoreinheit integriert ist.

15. Struktur eines Netzknotens für ein optisches Wellenlängenmultiplex-Übertragungsnetzwerk, insbesondere ein optisches Multi-Gigabit-Ethernet,
a) wobei in dem Netzwerk zwischen den Knoten (KN1-KN8) in beiden Übertragungsrichtungen ein optisches Wellenlängenmultiplexsignal mit m optischen Kanälen übertragen wird, welches in jedem optischen Kanal mit der Mittenwellenlänge 4 (j=1...m) ein optisches Zeitmultiplexsignal beinhaltet, das eine Rahmenstruktur mit einer Anzahl von n virtuellen Zeitslots aufweist, in welchen jeweils ein bestimmter Content transportiert wird,
b) wobei die Knotenstruktur einen optischen Add-/Drop-Multiplexer umfasst, welchem an einem ostseitigen Remote-Port und einem westseitigen Remote-Port jeweils ein optisches Wellenlängenmultiplexsignal zugeführt ist und welcher an den Remote-Ports jeweils ein optisches Wellenlängenmultiplexsignal abgibt, und
c) wobei der optische Add-/Drop-Multiplexer in dem betreffenden Knoten (KN1-KN8) jeweils wenigstens einen ostseitigen und westseitigen Local-Port aufweist, wobei der optische Add-/Drop-Multiplexer jeweils aus dem ostseitigen und westseitigen optischen Wellenlängenmultiplexsignal einen optischen Kanal mit jeweils einer bestimmten Mittenwellenlänge auskoppelt und auf dem betreffenden ostseitigen oder westseitigen Local-Port ausgibt und wobei der optische Add-/Drop-Multiplexer einen jeweils am ostseitigen oder westseitigen Local-Port zugeführten optischen Kanal mit jeweils einer bestimmten Mittenwellenlänge in das betreffende optische ostseitige oder westseitige Wellenlängenmultiplexsignal integriert,
**dadurch gekennzeichnet,**
d) **dass** der westseitige Local-Port des optischen Add-/Drop-Multiplexers mit dem westseitigen Remote-Port einer Schaltungsstruktur (10) nach einem der vorhergehenden Ansprüche verbunden ist, erforderlichenfalls unter Zwischenschaltung einer optischen Wandlereinheit, und dass der ostseitige Local-Port des optischen Add-/Drop-Multiplexers mit dem ostseitigen Remote-Port der Schaltungsstruktur verbunden ist, erforderlichenfalls unter Zwischenschaltung einer optischen Wandlereinheit.

## Claims

1. Circuit structure for implementing a node in a network for transmitting high bit-rate, IP-based time division-multiplexed signals, especially in an optical multi-gigabit Ethernet,
a) with a bidirectional west-side (PR_{west}) and a bidirectional east-side (PRₑₐₛₜ) remote port, wherein on the west-side remote port (PR_{west}) a west-side receive time division-multiplexed signal (SR_{west}) is received and a west-side transmit time division-multiplexed signal (ST_{west}) is transmitted and on the east-side remote port (PRₑₐₛₜ) an east-side receive time division-multiplexed signal (SRₑₐₛₜ) is received and an east-side transmit time division-multiplexed signal (STₑₐₛₜ) is transmitted,
b) wherein each time division-multiplexed signal (SR_{west} ST_{west}, SRₑₐₛₜ, STₑₐₛₜ) has a frame structure with a number of n virtual time slots, in each of which certain contents (C1 - C4) are transported,
**characterised in that**
c) the circuit structure (10) has a framer unit (7), to which is fed the west-side (SR_{west}) and the east-side (SRₑₐₛₜ) receive time division-multiplexed signal and which has a number of 2n bidirectional internal ports (P1Li_{west}-P4Li_{west}; P1Liₑₐₛₜ-P4Liₑₐₛₜ), at which the framer unit (7) outputs a receive signal, which comprises the contents of an assigned virtual time slot of the west-side (SR_{west}) and the east-side (SRₑₐₛₜ) receive time division-multiplexed signal, and on which a transmit signal can be fed to the framer unit (7), wherein the framer unit (7) feeds the contents of this transmit signal to the assigned virtual time slot when the relevant west-side (ST_{west}) or east-side (STₑₐₛₜ) transmit time division-multiplexed signal is generated, and **in that**
d) the circuit structure (10) has a path-switch unit (9), which is connected on one side to the 2n internal local ports (P1LI_{west}-P4LI_{west}; P1LIₑₐₛₜ-P4LIₑₐₛₜ) of the framer unit (7) and on the other side to at least one bidirectional local port (P1L to P4L),
e) wherein the path-switch unit (9) can execute at least the following switching functions as a function of a control signal:
i) Bidirectional connection of one of the 2n internal local ports (P1LI_{west}-P4LI_{west}; P1LIₑₐₛₜ-P4LIₑₐₛₜ) with the one or more local ports (P1L to P4L);
ii) Unidirectional connection of the k-th internal local port (P1LI_{west}-P4LI_{west}), to which are assigned the contents of the k-th virtual time slot of the west-side receive time division-multiplexed signal (SR_{west}), with the (k+n)-th internal local port (P1LIₑₐₛₜ-P4LIₑₐₛₜ), such that the contents of the k-th virtual time slot of the west-side receive time division-multiplexed signal (SR_{west}) are fed to the k-th virtual time slot of the east-side transmit time division-multiplexed signal (STₑₐₛₜ), and/or
iii) Unidirectional connection of the k-th internal local port (P1LIₑₐₛₜ-P4LIₑₐₛₜ), to which are assigned the contents of the k-th virtual time slot of the east-side receive time division-multiplexed signal (SRₑₐₛₜ), with the (k+n)-th internal local port (P1LI_{west}-P4LI_{west}), such that the contents of the k-th virtual time slot of the east-side receive time division-multiplexed signal (SRₑₐₛₜ) are fed to the k-th virtual time slot of the west-side transmit time division-multiplexed signal (ST_{west}) ;
iv) Unidirectional or bidirectional connection of the k-th of the 2n internal local ports (P1LI_{west}-P4LI_{west}), to which are assigned the contents of the k-th virtual time slot of the west-side receive time division-multiplexed signal (SR_{west}), with the one or more local ports (P1L to P4L) and simultaneous unidirectional connection of this k-th internal local port with the (k+n)-th internal local port, such that the contents of the k-th virtual time slot of the west-side receive time division-multiplexed signal (SR_{west}) are fed to the k-th virtual time slot of the east-side transmit time division-multiplexed signal (STₑₐₛₜ),
v) Unidirectional or bidirectional connection of the k-th of the 2n internal local ports (P1LIₑₐₛₜ-P4LIₑₐₛₜ), to which are assigned the contents of the k-th virtual time slot of the east-side receive time division-multiplexed signal (SRₑₐₛₜ), with the one or more local ports (P1L to P4L) and simultaneous unidirectional connection of this k-th internal local port (P1LIₑₐₛₜ-P4LIₑₐₛₜ) with the (k+n)-th internal local port( P1LI_{west}-P4LI_{west}), such that the contents of the k-th virtual time slot of the east-side receive time division-multiplexed signal (STₑₐₛₜ) are fed to the k-th virtual time slot of the west-side transmit time division-multiplexed signal (ST_{west}).

2. Circuit structure according to claim 1, **characterised in that** the contents of a gigabit-Ethernet signal or a multi-gigabit-Ethernet signal are transported in each of the n virtual time slots.

3. Circuit structure according to claim 1 or 2, **characterised in that** a transmit signal, which is fed to the one or more local ports (P1L to P4L) and which is fed via the path-switch unit (9) to one of the internal local ports (P1Li_{west}-P4Li_{west}; P1Liₑₐₛₜ-P4Liₑₐₛₜ), has a different data rate and/or a different transmission protocol than those corresponding to the assigned virtual time slot of the east-side or west-side transmit time division-multiplexed signal to be generated, and **in that** the framer unit (7) is constructed so that it converts the data rate and/or the protocol of the transmit signal fed to the local port (P1L to P4L) into the data rate necessary for supplying the relevant contents into the assigned virtual time slot of the transmit time division-multiplexed signal to be generated and/or the required protocol.

4. Circuit structure according to one of the preceding claims, **characterised in that** at least two local ports (P1L to P4L) are provided, which are connected to the path-switch unit (9) and **in that** the path-switch unit (9) is constructed so that the switching functions can be executed according to feature e) of claim 1 with reference to each of the two or more local ports (P1L to P4L).

5. Circuit structure according to claim 4, **characterised in that** the path-switch unit (9) is constructed so that it can also execute the following switching functions:
a) Bidirectional connection of the k-th internal local port (P1LI_{west}-P4LI_{west}; P1LIₑₐₛₜ-P4LIₑₐₛₜ) with a first of the two or more local ports (P1L to P4L) and simultaneous bidirectional connection of a second of the two or more local ports (P1L to P4L) with the (k+n)-th internal local port (P1LI_{west}-P4LI_{west}; P1LIₑₐₛₜ-P4LIₑₐₛₜ), in order to allow sharing of the k-th virtual time slot by two or more nodes (KN1-KN8).

6. Circuit structure according to one of the preceding claims, **characterised in that** a number of local ports (P1L to P4L) is provided, which correspond to the number n of virtual time slots and which are connected to the path-switch unit (9), and **in that** the path-switch unit (9) is constructed so that the switching functions according to feature e) of claim 1 can be executed with reference to each of the n local ports (P1L to P4L).

7. Circuit structure according to claim 6, **characterised in that** exactly one virtual slot of the east-side and the west-side receive and transmit time division-multiplexed signals (SRₑₐₛₜ, SR_{west;} STₑₐₛₜ, ST_{west}) is assigned to each of the n local ports (P1L to P4L).

8. Circuit structure according to one of the preceding claims, **characterised in that** on the east-side and west-side remote port there is an optoelectric converter unit, which converts an optical receive time division-multiplexed signal into an electrical receive time division-multiplexed signal and an electrical transmit time division-multiplexed signal into an optical transmit time division-multiplexed signal.

9. Circuit structure according to one of the preceding claims, **characterised in that** on each local port (P1L to P4L) there is an optoelectric converter unit (5), which converts an optical receive multiplexed signal into an electrical receive multiplexed signal and an electrical transmit multiplexed signal into an optical transmit multiplexed signal.

10. Circuit structure according to one of the preceding claims, **characterised in that** a signal regenerator unit is provided, which regenerates the receive time division-multiplexed signal (SRₑₐₛₜ, SR_{west}) which is fed to the framer unit (7), or the receive signals which are output to the internal local ports (P1LI_{west}-P4LI_{west}; P1LIₑₐₛₜ-P4LIₑₐₛₜ) of the framer unit (7) and/or regenerates the transmit signals which are fed to internal local ports (P1LI_{west}-P4LI_{west}; P1LIₑₐₛₜ-P4LIₑₐₛₜ) of the framer unit (7) or the transmit time division-multiplexed signal (STₑₐₛₜ, ST_{west}) output by the framer unit (7).

11. Channel card for an optical transmission system with a circuit structure (10) according to one of the preceding claims, wherein all of the necessary components are provided on the channel card.

12. Channel card according to claim 11, **characterised in that** at least one other pair of an east-side and west-side remote port is provided and **in that** between each east-side and west-side remote port of at least one other pair of remote ports another signal regenerator unit is provided, which is used for the signal preparation of another receive time division-multiplexed signal that is fed to the east-side remote port and which is then fed to the west-side remote port, and which is used for the signal preparation of a receive time division-multiplexed signal that is fed to the west-side remote port, which is then fed to the east-side remote port.

13. Channel card according to claim 12, **characterised in that** on each east-side and west-side remote port of at least one other pair of an east-side and west-side remote port an optoelectric converter unit is provided for optoelectric conversion of the relevant optical receive time division-multiplexed signal and for electro-optical conversion of the relevant electrical transmit time division-multiplexed signal.

14. Channel card according to claim 12 or 13, **characterised in that** the other signal regenerator unit for at least one other pair of an east-side and west-side remote port is integrated with the existing signal regenerator unit to form a single signal regenerator unit.

15. Structure of a network node for an optical wavelength division multiplexed transmission network, especially an optical multi-gigabit Ethernet,
a) wherein in the network an optical wavelength division-multiplexed signal with m optical channels is transmitted between the nodes (KN1-KN8) in both transmission directions, wherein this optical wavelength division-multiplexed signal contains in each optical channel with the intermediate wavelength λⱼ (j=1...m) an optical time division-multiplexed signal, which has a frame structure with a number of n virtual time slots, in each of which certain contents are transported,
b) wherein the node structure comprises an optical add/drop multiplexer, to which an optical wavelength division-multiplexed signal is fed to an east-side remote port and a west-side remote port and which outputs an optical wavelength division-multiplexed signal to the remote ports, and
c) wherein the optical add/drop multiplexer has at least one east-side and west-side local port in the relevant node (KN1-KN8), wherein the optical add/drop multiplexer decouples an optical channel each with a certain intermediate wavelength from the east-side and west-side optical wavelength division-multiplexed signal and outputs it on the relevant east-side or west-side local port and wherein the optical add/drop multiplexer integrates an optical channel fed on the east-side or west-side local port each with a certain intermediate wavelength into the relevant optical east-side or west-side wavelength division-multiplexed signal,
**characterised in that**
d) the west-side local port of the optical add/drop multiplexer is connected to the west-side remote port of a circuit structure (10) according to one of the preceding claims, if necessary with the intermediate connection of an optical converter unit, and **in that** the east-side local port of the optical add/drop multiplexer is connected to the east-side remote port of the circuit structure, if necessary with the intermediate connection of an optical converter unit.

## Revendications

1. Structure de circuit pour réaliser un noeud dans un réseau pour la transmission de signaux multiplexés dans le temps à base d'IP, à haut débit binaire, en particulier dans un multi-Gigabit Ethernet optique,
a) avec un port à distance bidirectionnel gauche (PR_{west}) et un port à distance bidirectionnel droit (PRₑₐₛₜ), dans laquelle, sur le port à distance gauche (PR_{west}), un signal de réception multiplexé dans le temps gauche (SR_{west}) est reçu et un signal de transmission multiplexé dans le temps gauche (ST_{west}) est émis et, sur le port à distance droit (PRₑₐₛₜ), un signal de réception multiplexé dans le temps droit (SRₑₐₛₜ) est reçu et un signal de transmission multiplexé dans le temps droit (STₑₐₛₜ) est émis,
b) dans laquelle chaque signal multiplexé dans le temps (SR_{west}, ST_{west}, SRₑₐₛₜ, STₑₐₛₜ) présente une structure de trame avec un nombre de n intervalles de temps virtuels, à l'intérieur desquels respectivement un contenu déterminé (C1 à C4) est transporté,
**caractérisée**
c) **en ce que** la structure de circuit (10) présente une unité de trameur (7), vers laquelle sont acheminés le signal de réception multiplexé dans le temps gauche (SR_{west}) et le signal de réception multiplexé dans le temps droit (SRₑₐₛₜ) et laquelle présente un nombre de 2n ports bidirectionnels internes (P1Li_{west}-P4Li_{west}; P1Liₑₐₛₜ-P4Liₑₐₛₜ), sur lesquels l'unité de trameur (7) émet respectivement un signal de réception, qui comprend respectivement le contenu d'un intervalle de temps virtuel correspondant du signal de réception multiplexé dans le temps gauche (SR_{west}) et droit (SRₑₐₛₜ), et sur lesquels un signal de transmission peut être acheminé respectivement vers l'unité de trameur (7), le contenu de ce signal de transmission étant acheminé par l'unité de trameur (7), vers l'intervalle de temps virtuel respectif correspondant lors de la génération du signal de transmission multiplexé dans le temps gauche (ST_{west}) ou droit (STₑₐₛₜ) concerné , et
d) **en ce que** la structure de circuit (10) présente une unité de commutation de chemin d'accès (9) qui est connectée, d'une part, aux 2n ports locaux internes (P1LI_{west}-P4LI_{west}; P1LIₑₐₛₜ-P4LIₑₐₛₜ) de l'unité de trameur (7) et, d'autre part, à au moins un port local bidirectionnel (P1L à P4L),
e) dans laquelle l'unité de commutation de chemin d'accès (9) peut exécuter, en fonction d'un signal de commande, au moins les fonctions de commutation suivantes :
i) établir une connexion bidirectionnelle d'un des 2n ports locaux internes (P1LI_{west}-P4LI_{west}; P1LIₑₐₛₜ-P4LIₑₐₛₜ) avec le au moins un port local (P1L à P4L) ;
ii) établir une connexion unidirectionnelle du k-ième port local interne (P1LI_{west}- P4LI_{west}), auquel est affecté le contenu du k-ième intervalle de temps virtuel du signal de réception multiplexé dans le temps gauche (SR_{west}), avec le (k+n)-ième port local interne (P1LIₑₐₛₜ-P4LIₑₐₛₜ) de sorte que le contenu du k-ième intervalle de temps virtuelle du signal de réception multiplexé dans le temps gauche (SR_{west}) soit acheminé vers le k-ième intervalle de temps virtuel du signal de transmission multiplexé dans le temps droit (STₑₐₛₜ), et/ou,
iii) établir une connexion unidirectionnelle du k-ième port local interne (P1LIₑₐₛₜ- P4LIₑₐₛₜ), auquel est affecté le contenu du k-ième intervalle de temps virtuel du signal de réception multiplexé dans le temps droit (SRₑₐₛₜ), avec le (k+n)-ième port local interne (P1LI_{west}-P4LI_{west}) de sorte que le contenu du k-ième intervalle de temps virtuel du signal de réception multiplexé dans le temps droit (SRₑₐₛₜ) soit acheminé vers le k-ième intervalle de temps virtuel du signal de transmission multiplexé dans le temps gauche (ST_{west});
iv) établir une connexion unidirectionnelle ou bidirectionnelle du k-ième des 2n ports locaux internes (P1LI_{west}-P4LI_{west}), auquel est affecté le contenu du k-ième intervalle de temps virtuel du signal de réception multiplexé dans le temps gauche (SR_{west}), avec le au moins un port local (P1L à P4L) et une connexion unidirectionnelle simultanée de ce k-ième port local interne avec le (k+n)-ième port local interne de sorte que le contenu du k-ième intervalle de temps virtuel du signal de réception multiplexé dans le temps gauche (SR_{west}) soit acheminé vers le k-ième intervalle de temps virtuel du signal de transmission multiplexé dans le temps droit (STₑₐₛₜ); et
v) établir une connexion unidirectionnelle ou bidirectionnelle du k-ième des 2n ports locaux internes (P1LIₑₐₛₜ-P4LIₑₐₛₜ), auquel est affecté le contenu du k-ième intervalle de temps virtuel du signal de réception multiplexé dans le temps droit (SRₑₐₛₜ), avec le au moins un port local (P1L à P4L) et une connexion unidirectionnelle simultanée de ce k-ième port local interne (P1LIₑₐₛₜ-P4LIₑₐₛₜ) avec le (k+n)-ième port local interne (P1LI_{west}-P4LI_{west}) de sorte que le contenu du k-ième intervalle de temps virtuel du signal de réception multiplexé dans le temps droit (SRₑₐₛₜ) soit acheminé vers le k-ième intervalle de temps virtuel du signal de transmission multiplexé dans le temps gauche (ST_{west}).

2. Structure de circuit selon la revendication 1, **caractérisée en ce que**, à l'intérieur de chacun des n intervalles de temps virtuels, le contenu d'un signal de Gigabit Ethernet ou d'un signal de multi-Gigabit Ethernet est transporté.

3. Structure de circuit selon la revendication 1 ou 2, **caractérisée en ce qu'**un signal de transmission acheminé vers au moins un port local (P1L à P4L), qui est acheminé via l'unité de commutation de chemin d'accès (9) vers l'un des ports locaux internes (P1LI_{west}-P4LI_{west} ; P1LIₑₐₛₜ-P4LIₑₐₛₜ), présente un débit et/ou un autre protocole de transmission qui est différent de ce qui correspond à l'intervalle de temps virtuel correspondant du signal de transmission multiplexé dans le temps droit ou gauche à générer et **en ce que** l'unité de trameur (7) est constituée de sorte qu'elle transforme le débit et/ou le protocole du signal de transmission acheminé vers le port local (P1L à P4L) en débit et/ou protocole nécessaire à l'acheminement du contenu concerné vers l'intervalle de temps virtuel correspondant du signal de transmission multiplexé dans le temps à générer.

4. Structure de circuit selon l'une quelconque des revendications précédentes, **caractérisée en ce qu'**au moins deux ports locaux (P1L à P4L) sont prévus, qui sont connectés à l'unité de commutation de chemin d'accès (9), et **en ce que** l'unité de commutation de chemin d'accès (9) est constituée de sorte que les fonctions de commutation puissent être effectuées selon la caractéristique e) de la revendication 1 concernant chacun des au moins deux ports locaux (P1L à P4L).

5. Structure de circuit selon la revendication 4, **caractérisée en ce que** l'unité de commutation de chemin d'accès (9) est constituée de sorte qu'elle puisse effectuer, en outre, la fonction de commutation suivante :
a) établir une connexion bidirectionnelle du k-ième port local interne (P1LI_{west}-P4LI_{west}; P1LIₑₐₛₜ-P4LIₑₐₛₜ) avec un premier des au moins deux ports locaux (P1L à P4L) et une connexion bidirectionnelle simultanée d'un second des au moins deux ports locaux (P1L à P4L) avec le (k+n)-ième port local interne (P1LI_{west}-P4LI_{west}; P1LIₑₐₛₜ-P4LIₑₐₛₜ) pour permettre un partage du k-ième intervalle de temps virtuel par deux ou plusieurs noeuds (KN1-KN8).

6. Structure de circuit selon l'une quelconque des revendications précédentes, **caractérisée en ce qu'**un nombre de ports locaux (P1L à P4L) correspondant au nombre n d'intervalles de temps virtuels est prévu, qui sont connectés à l'unité de commutation de chemin d'accès (9), et **en ce que** l'unité de commutation de chemin d'accès (9) est constituée de sorte que les fonctions de commutation puissent être effectuées selon la caractéristique e) de la revendication 1 concernant chacun des n ports locaux (P1L à P4L).

7. Structure de circuit selon la revendication 6, **caractérisée en ce qu'**exactement un intervalle de temps virtuel des signaux de réception et de transmission multiplexés dans le temps droits et gauches (SRₑₐₛₜ, SR_{west}, STₑₐₛₜ, ST_{west}) est respectivement attribué à chacun des n ports locaux (P1L à P4L).

8. Structure de circuit selon l'une quelconque des revendications précédentes, **caractérisée en ce que**, sur le port à distance droit et sur le port à distance gauche, une unité de conversion opto-électrique est respectivement prévue, qui transforme respectivement un signal de réception optique multiplexé dans le temps en un signal de réception électrique multiplexé dans le temps et un signal de transmission électrique multiplexé dans le temps en un signal de transmission optique multiplexé dans le temps.

9. Structure de circuit selon l'une quelconque des revendications précédentes, **caractérisée en ce que**, sur chaque port local (P1L à P4L), une unité de conversion opto-électrique (5) est prévue, qui transforme respectivement un signal de réception optique multiplexé en un signal de réception électrique multiplexé et un signal de transmission électrique multiplexé en un signal de transmission optique multiplexé.

10. Structure de circuit selon l'une quelconque des revendications précédentes, **caractérisée en ce qu'** une unité de régénération de signal est prévue, qui régénère le signal de réception multiplexé dans le temps (SRₑₐₛₜ, SR_{west}), lequel est acheminé vers l'unité de trameur (7), ou les signaux de réception, lesquels sont émis vers les ports locaux internes (P1LI_{west}-P4LI_{west}; P1LIₑₐₛₜ-P4LIₑₐₛₜ) de l'unité de trameur (7), et/ou qui régénère les signaux de transmission, lesquels sont acheminés, sur des ports locaux internes (P1LI_{west}-P4LI_{west}; P1LIₑₐₛₜ-P4LIₑₐₛₜ), vers l'unité de trameur (7), ou le signal de transmission multiplexé dans le temps (STₑₐₛₜ, ST_{west}), lequel est émis par l'unité de trameur (7).

11. Carte de Canal pour un système de transmission optique avec une structure de circuit (10) selon l'une quelconque des revendications précédentes, dans laquelle tous les composants nécessaires sont prévus sur la carte de Canal.

12. Carte de Canal selon la revendication 11, **caractérisée en ce qu'**au moins une autre paire de ports à distance droit et gauche est prévue et **en ce qu'**entre chaque port à distance droit et gauche de la au moins une autre paire de ports à distance, une autre unité de régénération de signal est prévue, qui sert au traitement de signal d'un autre signal de réception multiplexé dans le temps acheminé vers le port à distance droit, lequel signal est acheminé ensuite vers le port à distance gauche, et qui sert au traitement de signal d'un autre signal de réception multiplexé dans le temps acheminé vers le port à distance gauche, lequel signal est acheminé ensuite vers le port à distance droit.

13. Carte de Canal selon la revendication 12, **caractérisée en ce que**, sur chaque port à distance droit et gauche de la au moins une autre paire de ports à distance droit et gauche, une unité de conversion opto-électrique est prévue pour la conversion opto-électrique du signal de réception optique multiplexé dans le temps concerné et pour la conversion électro-optique du signal de transmission électrique multiplexé dans le temps concerné.

14. Carte de Canal selon la revendication 12 ou 13, **caractérisée en ce que** l'autre unité de régénération de signal pour la au moins une autre paire de ports à distance droit et gauche est intégrée à l'unité de régénération de signal présente pour former une unité de régénération de signal unique.

15. Structure d'un noeud dans un réseau pour un réseau de transmission à multiplexage de longueur d'onde optique, en particulier pour un réseau multi-Gigabit Ethernet optique,
a) dans laquelle, dans le réseau entre les noeuds (KN1-KN8), un signal optique multiplexé en longueur d'onde avec m canaux optiques est transmis dans les deux sens de transmission, lequel signal comporte, dans chaque canal optique ayant une longueur d'onde moyenne λⱼ (j=1...m), un signal optique multiplexé dans le temps présentant une structure de trame avec un nombre de n intervalles de temps virtuels, à l'intérieur desquels un contenu déterminé est respectivement transporté,
b) dans laquelle la structure nodale comprend un multiplexeur optique Add & Drop (ADM), vers lequel un signal optique multiplexé en longueur d'onde est acheminé respectivement, sur un port à distance droit et gauche, et qui émet, sur les ports à distance, respectivement un signal optique multiplexé en longueur d'onde, et
c) dans laquelle le multiplexeur optique Add & Drop (ADM) présente, dans les noeuds concernés (KN1-KN8), respectivement au moins un port local droit et sur un port local gauche, dans laquelle le multiplexeur optique Add & Drop (ADM) découple respectivement, depuis le signal optique multiplexé en longueur d'onde droit et gauche, un canal optique ayant respectivement une longueur d'onde moyenne déterminée et l'émet sur le port local droit ou gauche concerné et dans laquelle le multiplexeur optique Add & Drop (ADM) intègre un canal optique, ayant respectivement une longueur d'onde moyenne déterminée et étant acheminé respectivement sur le port local droit ou gauche, au signal optique multiplexé en longueur d'onde droit ou gauche concerné,
**caractérisée en ce que**
d) le port local gauche du multiplexeur optique Add & Drop (ADM) droit est connecté au port à distance gauche d'une structure de circuit (10) selon l'une quelconque des revendications précédentes, le cas échéant par intercalage d'une unité de conversion optique, et **en ce que** le port local droit du multiplexeur optique Add & Drop (ADM) est connecté au port à distance droit de la structure de circuit, le cas échéant par intercalage d'une unité de conversion optique.
